Europäisches Patentamt

European Patent Office

Office européen des brevets

(19)

(11) **EP 1 140 331 B1**

(12) **EUROPÄISCHE PATENTSCHRIFT**

(45) Veröffentlichungstag und Bekanntmachung des Hinweises auf die Patenterteilung:
**02.01.2003 Patentblatt 2003/01**

(21) Anmeldenummer: **00909086.1**

(22) Anmeldetag: **19.01.2000**

(51) Int Cl.[7]: **B01D 67/00**, B01D 69/02, B01D 69/08, B01D 71/26, C08J 9/28

(86) Internationale Anmeldenummer:
**PCT/EP00/00391**

(87) Internationale Veröffentlichungsnummer:
**WO 00/043113 (27.07.2000 Gazette 2000/30)**

(54) **VERFAHREN ZUR HERSTELLUNG EINER INTEGRAL ASYMMETRISCHEN POLYOLEFINMEMBRAN**

METHOD FOR PRODUCING AN INTEGRALLY ASYMMETRICAL POLYOLEFIN MEMBRANE

PROCEDE DE FABRICATION D'UNE MEMBRANE POLYOLEFINIQUE INTEGRALEMENT ASYMETRIQUE

(84) Benannte Vertragsstaaten:
**BE DE DK FR GB IT**

(30) Priorität: **22.01.1999 DE 19902566**

(43) Veröffentlichungstag der Anmeldung:
**10.10.2001 Patentblatt 2001/41**

(73) Patentinhaber: **Membrana GmbH**
**42289 Wuppertal-Barmen (DE)**

(72) Erfinder:
• **KESSLER, Erich**
**D-64739 Höchst i. Odw. (DE)**
• **BATZILLA, Thomas**
**D-63927 Bürgstadt (DE)**
• **WECHS, Friedbert**
**D-63939 Wörth (DE)**
• **WIESE, Frank**
**D-42289 Wuppertal (DE)**

(74) Vertreter: **Fett, Günter et al**
**CPW GmbH**
**Kasinostrasse 19-21**
**42103 Wuppertal (DE)**

(56) Entgegenhaltungen:
EP-A- 0 133 882          WO-A-99/04891
DE-A- 3 205 289          US-A- 4 247 498

**Beschreibung**

Die Erfindung betrifft ein Verfahren zur Herstellung einer hydrophoben Membran über einen thermisch induzierten Phasenseparationsprozess gemäß Oberbegriff des Anspruchs 1, wobei die Membran eine schwammartige, offenporige mikroporöse Struktur enthält, sowie die Verwendung der Membran für Gasaustauschprozesse, insbesondere zur Oxygenation von Blut.

In einer Vielzahl von Anwendungen aus den Bereichen der Chemie, Biochemie oder der Medizin stellt sich das Problem, gasförmige Komponenten aus Flüssigkeiten abzutrennen oder solche Komponenten den Flüssigkeiten hinzuzufügen. Für derartige Gasaustauschprozesse werden in zunehmendem Maße Membranen eingesetzt, die als Trennmembran zwischen der jeweiligen Flüssigkeit, von der eine gasförmige Komponente abgetrennt bzw. zu der eine gasförmige Komponente hinzugefügt werden soll, und einem diese gasförmige Komponente aufnehmenden oder abgebenden Fluid dient. Hierbei kann das Fluid sowohl ein Gas sein oder auch eine Flüssigkeit, die die auszutauschende Gaskomponente enthält bzw. aufnehmen kann. Mittels derartiger Membranen kann eine große Austauschfläche für den Gasaustausch bereitgestellt werden und - wenn dies erforderlich ist - ein direkter Kontakt zwischen Flüssigkeit und Fluid vermieden werden.

Eine wichtige Anwendung membranbasierter Gasaustauschprozesse im medizinischen Bereich sind Oxygenatoren, auch künstliche Lungen genannt. Bei diesen Oxygenatoren, die z.B. bei Operationen am offenen Herzen eingesetzt werden, erfolgt eine Oxygenation von Blut und eine Entfernung von Kohlendioxid aus dem Blut. In der Regel werden bei derartigen Oxygenatoren Bündel aus Hohlfasermembranen eingesetzt. Venöses Blut strömt dabei im Außenraum um die Hohlfasermembranen, während durch das Lumen der Hohlfasermembranen Luft, mit Sauerstoff angereicherte Luft oder auch reiner Sauerstoff, d.h. ein Gas geführt wird. Über die Membranen besteht ein Kontakt zwischen Blut und Gas, wodurch ein Transport von Sauerstoff in das Blut und gleichzeitig ein Transport von Kohlendioxid aus dem Blut in das Gas erfolgen kann.

Um das Blut ausreichend mit Sauerstoff zu versorgen und gleichzeitig Kohlendioxid in ausreichendem Maße aus dem Blut entfernen zu können, müssen die Membranen einen hohen Gastransport gewährleisten: Es muß eine ausreichende Menge Sauerstoff von der Gasseite der Membran zur Blutseite und umgekehrt eine ausreichende Menge Kohlendioxid von der Blutseite der Membran zur Gasseite transferiert werden, d.h. die Gasflüsse bzw. die Gastransferraten, ausgedrückt als das Volumen eines Gases, das pro Zeiteinheit und Membranfläche von einer Membranseite auf die andere transportiert wird, müssen groß sein. Einen entscheidenden Einfluß auf die Transferraten besitzt die Porosität der Membran, da nur bei ausreichend hoher Porosität ausreichende Transferraten erzielt werden können.

Es befinden sich eine Reihe von Oxygenatoren im Einsatz, die Hohlfasermembranen mit offenporiger mikroporöser Struktur enthalten. Eine Möglichkeit, derartige Membranen für den Gasaustausch d.h. z.B. für die Oxygenation herzustellen, wird in der DE-A-28 33 493 beschrieben. Mit dem Verfahren gemäß dieser Schrift lassen sich Membranen aus schmelzeflüssigen thermoplastischen Polymeren mit bis zu 90 Vol.-% miteinander in Verbindung stehenden Poren herstellen. Das Verfahren basiert auf einem thermisch induzierten Phasenseparationsprozess mit flüssig-flüssig-Phasenseparation. Bei diesem Prozeß wird zunächst eine homogene einphasige Schmelzemischung aus dem thermoplastischen Polymer und einer kompatiblen Komponente, die mit dem Polymer ein binäres System ausbildet, das im flüssigen Aggregatzustand einen Bereich völliger Mischbarkeit und einen Bereich mit Mischungslücke aufweist, hergestellt und diese Schmelzemischung dann in ein Bad extrudiert, das gegenüber dem Polymer im wesentlichen chemisch inert ist, d.h. im wesentlichen chemisch nicht mit ihm reagiert, und eine Temperatur unterhalb der Entmischungstemperatur besitzt. Hierdurch wird eine flüssig-flüssig-Phasentrennung eingeleitet und bei weiterer Abkühlung das thermoplastische Polymer zur Membranstruktur verfestigt.

Ein verbessertes Verfahren zur Herstellung derartiger Membranen, das eine gezielte Einstellung von Porenvolumen, Porengröße und Porenwandung erlaubt, wird in der DE-A-32 05 289 offenbart. Bei diesem Verfahren werden 5-90 Gew.-% eines Polymeren durch Erwärmen über die kritische Entmischungstemperatur in 10-95 Gew.-% eines Lösemittelsystems aus einer ersten und einer zweiten Verbindung, die bei der Lösetemperatur flüssig und miteinander mischbar sind, zu einer homogenen Lösung gelöst, wobei das eingesetzte Gemisch aus dem Polymer und den genannten Verbindungen im flüssigen Aggregatzustand unterhalb der kritischen Entmischungstemperatur eine Mischungslücke aufweist, die erste Verbindung ein Löser für das Polymer ist und die zweite Verbindung die Phasentrennungstemperatur einer Lösung, bestehend aus dem Polymer und der ersten Verbindung, heraufsetzt. Die Lösung wird ausgeformt, durch Abkühlung im einem Abkühlmedium aus der ersten Verbindung oder aus dem eingesetzten Lösemittelsystem zur Entmischung und Erstarrung der polymerreichen Phase gebracht, und anschließend werden die genannten Verbindungen extrahiert.

Die gemäß DE-A-28 33 493 oder DE-A-32 05 289 offenbarten Membranen weisen eine offenporige mikroporöse Struktur und auch offenporige mikroporöse Oberflächen auf. Dies hat zwar auf der einen Seite zur Folge, dass gasförmige Stoffe, also beispielsweise Sauerstoff ($O_2$) oder Kohlendioxid ($CO_2$), relativ ungehindert durch die Membran hindurchtreten können und der Transport eines Gases als "Knudsen Fluss" erfolgt, verbunden mit relativ hohen Transferraten für Gase bzw. hohen Gasflüssen durch die Membran. So weisen derartige Membranen mit Gasflüssen für

$CO_2$ von größer 1 ml/(cm$^2$*min*bar) und Gasflüssen für $O_2$ in etwa der gleichen Größe Gasflüsse auf, die für eine Oxygenation von Blut ausreichend groß sind.

Auf der anderen Seite jedoch kann bei längerem Einsatz dieser Membranen bei der Blutoxygenation oder allgemein bei Gasaustauschprozessen mit wässrigen Flüssigkeiten, auch wenn in diesen Fällen die Membranen aus hydrophoben Polymeren und insbesondere aus Polyolefinen hergestellt sind, Blutplasma bzw. ein Teil der Flüssigkeit in die Membran eindringen und im Extremfall auf der Gasseite der Membran austreten. Dies hat einen drastischen Abfall der Gastransferraten zur Folge. Bei Anwendungen im medizinischen Bereich der Blutoxygenation wird dies als Plasmadurchbruch bezeichnet.

Die Plasmadurchbruchzeit derartiger Membranen, wie sie gemäß DE-A-28 33 493 oder DE-A-32 05 289 herstellbar sind, reicht zwar in den meisten Fällen der konventionellen Blutoxygenation aus, um einen Patienten bei einer normalen Operation am offenen Herzen zu oxygenieren. Jedoch besteht der Wunsch nach Membranen mit höherer Plasmadurchbruchzeit, um höhere Sicherheiten bei länger andauernden Herzoperationen zu erlangen und einen Plasmadurchbruch auszuschließen, der einen sofortigen Austausch des Oxygenators erforderlich machen würde. Ziel ist aber auch, beispielsweise Frühgeburten oder allgemein Patienten mit temporär eingeschränkter Lungenfunktion solange oxygenieren zu können, bis die Lungenfunktion wiederhergestellt ist, d.h. also Langzeitoxygenationen durchführen zu können. Hierfür sind entsprechend lange Plasmadurchbruchzeiten Voraussetzung. Ein in diesem Zusammenhang häufig geforderter Mindestwert für die Plasmadurchbruchzeit liegt bei 20 Stunden.

Aus der EP-A-299 381 sind Hohlfasermembranen zur Oxygenation bekannt, die Plasmadurchbruchzeiten von länger als 20 Stunden aufweisen, d.h. auch bei langandauerndem Einsatz keinen Plasmadurchbruch zeigen. Dies wird bei der ansonsten porösen Membran mit zellulärer Struktur durch eine Sperrschicht erreicht, die eine aus dem Sauerstofffluss und dem Stickstofffluss errechnete mittlere Dicke von nicht mehr als 2 um aufweist und im wesentlichen für Ethanol undurchlässig ist. Die Membran ist im wesentlichen frei von offenen Poren, d.h. von Poren, die sowohl zur Außenseite als auch zur Innenseite der Hohlfasermembran geöffnet sind. Die Membranen gemäß EP-A-299 381 weisen entsprechend den offenbarten Beispielen eine Porosität von maximal 31 Vol.-% auf, da bei höheren Porositäten die Poren miteinander verbunden sind und eine Kommunikation zwischen den Seiten der Hohlfasermembranen erfolgt, was einen Plasmadurchbruch zur Folge hat. In der Sperrschicht erfolgt der Transport der auszutauschenden Gase über Lösungsdiffusion.

Die Herstellung dieser Membranen erfolgt über ein Schmelz-Streckverfahren, d.h. das Polymer wird zunächst zu einer Hohlfaser schmelzextrudiert und anschließend warm- und kaltverstreckt. Hierbei werden nur relativ niedrige Porositäten erhalten, wodurch in Verbindung mit dem in der Sperrschicht auftretenden Transport über Lösungsdiffusion auch die erzielbaren Transferraten für Sauerstoff und Kohlendioxid relativ gering bleiben. Darüber hinaus weisen die Hohlfasermembranen gemäß EP-A-299 381 aufgrund der mit der Herstellung verbundenen starken Verstreckung zwar eine ausreichende Festigkeit, jedoch nur eine geringe Bruchdehnung auf. In nachfolgenden textilen Verarbeitungsschritten z.B. zur Herstellung von Hohlfasermatten, die sich für die Herstellung von Oxygenatoren mit guter Austauschleistung bestens bewährt haben und wie sie beispielsweise in der EP-A-285 812 beschrieben werden, lassen sich daher diese Hohlfasermembranen nur schlecht verarbeiten.

Typischerweise entstehen bei Schmelz-Streckverfahren Membranen mit schlitzförmigen Poren mit ausgeprägter Anisotropie, deren eine Haupterstreckung senkrecht zur Streckrichtung und deren zweite Haupterstreckung senkrecht zur Membranoberfläche liegt, d.h. bei Hohlfasermembranen zwischen Membranaussenoberfläche und Membraninnenoberfläche verläuft. Hierdurch erstrecken sich durch die Poren ausgebildete Kanäle relativ geradlinig zwischen den Oberflächen. Im Falle, dass z.B. infolge mechanischer Beschädigungen beim Spinnprozeß Leckstellen in der Sperrschicht auftreten, existiert dann eine bevorzugte Richtung für den Fluß einer Flüssigkeit zwischen Innen- und Außenoberfläche oder umgekehrt, so dass dadurch ein Plasmadurchbruch begünstigt wird.

Es ist daher Aufgabe der Erfindung, ein vielseitig einsetzbares Verfahren zur Verfügung zu stellen, mittels dessen integral asymmetrische Membranen mit mikroporöser Stützstruktur und einer Trennschicht mit dichterer Struktur hergestellt werden können, die für den Gasaustausch geeignet sind, bei denen die Nachteile der Membranen des Stands der Technik zumindest reduziert sind, die eine hohe Gasaustauschleistung aufweisen, zumindest über lange Zeiträume dicht sind gegen einen Durchbruch von hydrophilen Flüssigkeiten, insbesondere von Blutplasma, d.h. insbesondere für die Langzeitoxygenation geeignet sind, und die gute Weiterverarbeitungseigenschaften aufweisen.

Die Aufgabe wird gelöst durch ein Verfahren zur Herstellung einer integral asymmetrischen hydrophoben Membran mit einer schwammartigen, offenporigen mikroporösen Stützstruktur und einer Trennschicht mit gegenüber der Stützstruktur dichterer Struktur, wobei das Verfahren mindestens die Schritte umfaßt:

a) Herstellung einer homogenen Lösung von 20-90 Gew.-% einer Polymerkomponente aus mindestens einem Polymer, ausgewählt aus der Gruppe der Polyolefine, in 80-10 Gew.-% eines Lösemittelsystems, enthaltend eine Verbindung A und eine Verbindung B, welche bei der Lösetemperatur flüssig und miteinander mischbar sind, wobei das eingesetzte Gemisch aus Polymerkomponente, Verbindung A und Verbindung B eine kritische Entmischungstemperatur und eine Erstarrungstemperatur aufweist und unterhalb der kritischen Entmischungstemperatur im flüssigen Aggregatzustand eine Mischungslücke, wobei als Verbindung A ein Löser für die Polymerkomponente ausgewählt wird und die Verbindung B die Entmischungstemperatur einer Lösung, bestehend aus der Polymerkomponente und der Verbindung A, heraufsetzt,

b) Ausformen der Lösung zu einem Formkörper mit einer ersten Oberfläche und einer zweiten Oberfläche in einem Formwerkzeug, welches eine Werkzeugtemperatur oberhalb der kritischen Entmischungstemperatur aufweist,

c) Abkühlung des Formkörpers mittels eines Abkühlmediums, welches auf eine Abkühltemperatur unterhalb der Erstarrungstemperatur temperiert ist, mit einer solchen Geschwindigkeit, dass eine thermodynamische Nichtgleichgewichts-flüssigflüssig-Phasentrennung in eine polymerreiche und eine polymerarme Phase und anschließend bei Unterschreiten der Erstarrungstemperatur Erstarrung der polymerreichen Phase erfolgt,

d) gegebenenfalls Entfernen der Verbindungen A und B aus dem Formkörper, dadurch gekennzeichnet, dass als Verbindung A ein schwacher Löser für die Polymerkomponente ausgewählt wird, für den die Entmischungstemperatur einer Lösung von 25 Gew.-% der Polymerkomponente in diesem Löser um höchstens, aber nicht 10%, d. h. um weniger als 10% unter dem Schmelzpunkt der reinen Polymerkomponente liegt, dass als Verbindung B ein Nichtlöser für die Polymerkomponente ausgewählt wird, welcher die Polymerkomponente beim Erwärmen bis zum Siedepunkt des Nichtlösers nicht zu einer homogenen Lösung löst, und dass der Formkörper zur Abkühlung mit einem festen oder flüssigen Abkühlmedium in Kontakt gebracht wird, welches die Polymerkomponente bei Temperaturen bis zur Werkzeugtemperatur nicht löst und chemisch nicht mit ihm reagiert.

Überraschenderweise hat sich gezeigt, dass bei Einhaltung dieser Verfahrensbedingungen integral asymmetrische Membranen erhalten werden, bei denen mindestens eine Oberfläche als Trennschicht mit gegenüber der Stützschichtstruktur dichterer Struktur ausgebildet ist, die die daran angrenzende schwammartige, offenporige mikroporöse Stützschichtstruktur abdeckt. Mittels des erfindungsgemäßen Verfahrens lassen sich Trennschichten mit sehr dünnen Schichtdicken realisieren, deren Struktur von einer dichten Struktur bis hin zu einer nanoporösen Struktur mit Poren mit einer mittleren Porengröße von kleiner 100 nm und in Einzelfällen auch darüber hinaus eingestellt werden kann. Gleichzeitig weist die Stützschicht der so hergestellten Membranen eine hohe Volumenporosität auf.

Vorzugsweise werden mittels des erfindungsgemäßen Verfahrens integral asymmetrische Membranen mit einer dichten Trennschicht hergestellt. Unter einer dichten Struktur wird hierbei eine solche Struktur verstanden, für die bei rasterelektronenmikroskopischer Untersuchung mit 60000-facher Vergrößerung keine Poren zu erkennen sind.

Das erfindungsgemäße Verfahren erlaubt also die Herstellung integral asymmetrischer Membranen mit einer gegenüber einem Flüssigkeitsdurchbruch über lange Zeiträume dichten, jedoch gasdurchlässigen Trennschicht und einer Stützschicht mit hoher Volumenporosität, wodurch für diese Membranen in Gastransferprozessen gleichzeitig hohe Gastransferleistungen resultieren. Diese Membranen lassen sich hervorragend zur Langzeitoxygenation von Blut einsetzen, wobei die Trennschicht dieser Membranen dafür verantwortlich zeichnet, dass diese Membranen über lange Zeiträume gegenüber dem Durchbruch von Blutplasma dicht sind.

Im Sinne der vorliegenden Erfindung wird unter einer integral asymmetrischen Membran eine Membran verstanden, bei der Trennschicht und Stützschicht aus dem gleichen Material bestehen sowie zusammen unmittelbar bei der Membranherstellung ausgebildet wurden, wodurch beide Schichten als integrale Einheit miteinander verbunden sind. Beim Übergang von der Trennschicht zur Stützschicht erfolgt allein eine Änderung in Bezug auf die Membranstruktur. Einen Gegensatz dazu bilden beispielsweise Composit-Membranen, die einen mehrschichtigen Aufbau aufweisen, indem auf einer porösen, oftmals mikroporösen Stützschicht oder Stützmembran in einem separaten Verfahrensschritt eine dichte Schicht als Trennschicht aufgebracht ist. Dies hat zur Folge, dass die Materialien, die die Stützschicht und die Trennschicht aufbauen, bei Composit-Membranen auch unterschiedliche Eigenschaften aufweisen.

Das erfindungsgemäße Verfahren beruht auf einem thermisch induzierten Phasenseparationsprozess mit flüssig-flüssig-Phasentrennung. Erfindungsgemäß bilden die Polymerkomponente und die Verbindungen A und B ein binäres System, das im flüssigen Aggregatzustand einen Bereich aufweist, in dem das System als homogene Lösung vorliegt, und einen Bereich, in dem es eine Mischungslücke besitzt. Wird ein solches System aus dem Bereich, in dem es als homogene Lösung vorliegt, unter die kritische Entmischungs- oder Phasentrenntemperatur abgekühlt, so tritt zunächst eine flüssig-flüssig Entmischung bzw. Phasentrennung in zwei flüssige Phasen auf, nämlich in eine polymerreiche und eine polymerarme Phase. Bei weiterer Abkühlung bis unter die Erstarrungstemperatur erstarrt die polymerreiche Phase zur dreidimensionalen Membranstruktur. Die Abkühlgeschwindigkeit hat dabei einen wesentlichen Einfluß auf die entstehende Porenstruktur. Ist die Abkühlgeschwindigkeit genügend groß, dass die flüssig-flüssig-Phasentrennung nicht unter thermodynamischen Gleichgewichtsbedingungen erfolgen kann sondern unter thermodynamischen Nichtgleichgewichtsbedingungen, jedoch andererseits dennoch relativ langsam, erfolgt die flüssig-flüssig-Phasentrennung etwa gleichzeitig mit der Ausbildung einer Vielzahl von Flüssigkeitströpfchen von im wesentlichen gleicher Größe. Das resultierende Polymergebilde weist dann eine schwammartige zellförmige und offenporige Mikrostruktur auf. Ist die Abkühlgeschwindigkeit deutlich höher, so wird das Polymer fest, bevor sich die meisten Flüssigkeitströpfchen ausbilden können. Hierbei entstehen dann netzwerkartige Mikrostrukturen. Die verschiedenartige Ausbildung solcher schwammartiger mikroporöser Strukturen über Prozesse mit thermisch induzierter flüssig-flüssig-Phasentrennung werden eingehend in der DE-A 27 37 745 beschrieben, auf deren Offenbarung sich ausdrücklich bezogen wird, und z.B. in R.E. Kesting: "Synthetic Polymeric Membranes", John Wiley & Sons, 1985, S. 261-264, dargestellt.

Die eingesetzten Zusammensetzungen aus der Polymerkomponente, der Verbindung A und der Verbindung B, wobei die Verbindungen A und B zusammen das Lösemittelsystem ausbilden, müssen gemeinsam in eine einzige homogene flüssige Phase überführbar sein und eine kritische Entmischungstemperatur aufweisen, unterhalb derer eine Phasentrennung in zwei flüssige Phasen auftritt. Bei den erfindungsgemäß als Verbindung A eingesetzten schwachen Lösern weisen die Systeme Polymerkomponente/Verbindung A im flüssigen Aggregatzustand eine Mischungslücke auf und damit verbunden eine kritische Entmischungstemperatur. Durch den Zusatz der Verbindung B wird diese kritische Entmischungstemperatur heraufgesetzt, wobei jeweils Lösungen mit gleichen Anteilen an Polymer betrachtet werden. Durch Zugabe der Verbindung B wird eine gezielte Steuerung der Porengröße und des Porenvolumens der erhaltenen porösen Strukturen ermöglicht.

Als Verbindung A sind solche Verbindungen einzusetzen, die Lösemittel für die Polymerkomponente sind und in der die Polymerkomponente bei Erwärmen bis höchstens zum Siedepunkt dieser Verbindung zu einer homogenen Lösung vollständig gelöst wird. Erfindungsgemäß ist dabei ein solcher Löser als Verbindung A einzusetzen, für den die Entmischungstemperatur einer Lösung von 25 Gew.-% der Polymerkomponente in diesem Löser um weniger als 10% unter dem Schmelzpunkt der reinen Polymerkomponente liegt. Im Rahmen der vorliegenden Erfindung wird ein solcher Löser als schwacher Löser bezeichnet. Demgegenüber wird im Rahmen der vorliegenden Erfindung unter einem starken Löser ein solcher Löser verstanden, bei dem die Entmischungstemperatur einer Lösung von 25 Gew.-% der Polymerkomponente in diesem Löser um mindestens 14% unter dem Schmelzpunkt der reinen Polymerkomponente liegt.

Die Entmischungs- oder Phasentrenntemperatur kann dabei auf einfache Weise festgestellt werden, indem zunächst eine homogene Lösung der Polymerkomponente in dem zu untersuchenden Löser hergestellt und diese dann auf eine Temperatur aufheizt wird, die ca. 20°C oberhalb der Lösetemperatur liegt. Diese Lösung wird ca. 0,5 Std unter Rühren auf dieser Temperatur gehalten, um eine hinreichende Homogenität zu gewährleisten. Anschließend wird die Lösung mit einer Abkühlrate von 1°C/min unter Rühren abgekühlt. Als Phasentrenntemperatur wird dabei die Temperatur bestimmt, bei der visuell eine beginnende Trübung feststellbar ist. Bei weiterer Abkühlung tritt bei der Erstarrungstemperatur ein Festwerden der polymerreichen Phase ein.

Als Verbindung B wird erfindungsgemäß eine solche Verbindung ausgewählt, die ein Nichtlöser für die Polymerkomponente ist. Unter Nichtlöser für die Polymerkomponente wird dabei eine Verbindung B verstanden, welche die Polymerkomponente in einer Konzentration von 1 Gew.-% in dem Nichtlöser beim Erwärmen bis höchstens zum Siedepunkt des Nichtlösers nicht zu einer homogenen Lösung auflöst.

Die Verbindung A kann zusätzlich mit einer oder mehreren Flüssigkeiten, insbesondere mit weiteren Lösern verschnitten sein. Auch die Verbindung B kann in Mischung mit einer oder mehreren weiteren Verbindungen, insbesondere weiteren Nichtlösern eingesetzt werden. Infolgedessen wird im Rahmen der vorliegenden Erfindung unter der Verbindung A nicht nur eine einzelne Verbindung verstanden, sondern auch eine Mischung verschiedener Löser, also z.B. zweier schwacher Löser oder eines schwachen Lösers mit Anteilen eines stärkeren Lösers, solange die Gesamtwirkung als schwacher Löser erhalten bleibt. Ebenso wird unter der Verbindung B auch eine Mischung verschiedener Nichtlöser verstanden.

Die Ausbildung der Trennschicht sowie der Grad ihrer Dichtheit wird unter anderem durch die verwendete Verbindung B beeinflusst. In einer besonders bevorzugten Ausgestaltung des erfindungsgemäßen Verfahrens ist die Verbindung B ein schwacher Nichtlöser für die Polymerkomponente. Hierbei wird im Rahmen der vorliegenden Erfindung die Stärke eines Nichtlösers beurteilt anhand der Differenz zwischen der Entmischungstemperatur eines aus der Polymerkomponente und einem starken Löser bestehenden Systems, und der Entmischungstemperatur eines entsprechenden Systems, enthaltend als Lösemittelsystem den gleichen Löser sowie 10 Gew.-% des zu untersuchenden Nichtlösers. Die Konzentration der Polymerkomponente liegt in beiden Fällen bei 25 Gew.-%. Unter einem schwachen Nichtlöser wird dann ein solcher verstanden, der zu einer Erhöhung der Entmischungstemperatur von höchstens 8% gegenüber der Entmischungstemperatur des entsprechenden, nur aus Löser und der Polymerkomponente bestehenden Systems führt. Ein starker Nichtlöser ist dann ein solcher, der zu einer Erhöhung der Entmischungstemperatur von mindestens 10% führt.

Der zur Membranherstellung erforderliche Anteil an Polymer sowie das Verhältnis von Verbindung A zu Verbindung B im Lösemittelsystem läßt sich durch Erstellung von Phasendiagrammen mittels einfacher Versuche ermitteln. Derartige Phasendiagramme können nach bekannten Methoden entwickelt werden, wie sie z.B. von C.A. Smolders, J.J. van Aartsen, A. Steenbergen, Kolloid-Z. und Z. Polymere, 243 (1971), S. 14-20, beschrieben werden. In der Regel ist bei einem vorgegebenen Löser A bei Verwendung eines schwachen Nichtlösers als Verbindung B der Anteil an Verbindung B in der Mischung aus der Polymerkomponente, der Verbindung A und der Verbindung B höher zu wählen als bei Verwendung eines starken Nichtlösers als Verbindung B. Bevorzugt beträgt der Anteil der Verbindung B im Lösemittelsystem 1 bis 45 Gew.-%.

Erfindungsgemäß wird als Polymerkomponente mindestens ein Polymer, ausgewählt aus der Gruppe der Polyolefine, eingesetzt. Hierbei kann es sich bei der Polymerkomponente um ein einzelnes Polyolefin oder um eine Mischung aus mehreren Polyolefinen handeln, wobei zu den Polyolefinen auch Polyolefincopolymere oder modifizierte Polyolefine zu rechnen sind. Mischungen aus verschiedenen Polyolefinen sind hierbei insofern interessant, als dadurch verschiedene Eigenschaften wie z.B. Permeabilitäten oder mechanische Eigenschaften optimiert werden können. So läßt sich z.B. durch Zugabe bereits geringer Mengen eines Polyolefins mit ultrahohem Molekulargewicht, also beispielsweise mit einem Molekulargewicht von mehr als $10^6$ Dalton, ein starker Einfluß auf die mechanischen Eigenschaften nehmen. Voraussetzung ist dabei natürlich, dass die dabei eingesetzten Polyolefine zusammen in dem verwendeten Lösemittelsystem löslich sind.

In einer vorteilhaften Ausgestaltung des erfinderischen Verfahrens ist das in der Polymerkomponente enthaltene mindestens eine Polymer mindestens ein ausschließlich aus Kohlenstoff und Wasserstoff bestehendes Polyolefin. Besonders bevorzugte Polyolefine sind Polyethylen, Polypropylen und Poly(4-methyl-1-penten) oder Mischungen dieser Polyolefine untereinander oder mit anderen Polyolefinen. Von besonderem Vorteil ist die Verwendung von Poly(4-methyl-1-penten) oder von einer Mischung von Poly(4-methyl-1-penten) mit Polypropylen. Hiermit lassen sich hohe Gastransferraten bei guten mechanischen Eigenschaften der Membranen realisieren.

Als Verbindungen A und B, die gemeinsam das Lösemittelsystem ausbilden, sind solche Verbindungen einzusetzen, die die genannten Bedingungen erfüllen. Im Falle der bevorzugten Verwendung von Polyethylen als Polymerkomponente kommen als Verbindung A vorzugsweise Sojaöl, Palmkernöl, Isopropylmyristat oder Mischungen hieraus zu Einsatz. Als Verbindung B erweist sich dann Rizinusöl als vorteilhaft. Im Falle der bevorzugten Verwendung von Polypropylen als Polymerkomponente werden vorzugsweise als Verbindung A N,N-Bis(2-hydroxyethyl)talgfettamin, Dioctylphthalat, Sojaöl, Palmkemöl oder Mischungen hieraus eingesetzt. Als Verbindung B lassen sich hierbei vorteilhaft Diethylphthalat, Glycerintriacetat, Rizinusöl oder Mischungen hieraus verwenden. Beim bevorzugten Einsatz von Poly-(4-methyl-1-penten) als Polyolefin kommen als Verbindung A vorzugsweise Palmkemöl, Dibutylphthalat, Dioctylphthalat, Butylstearat oder Mischungen hieraus in Frage. Als Verbindung B haben sich dann Glycerintriacetat, Diethylphthalat, Rizinusöl, N,N-Bis(2-hydroxyethyl)talgfettamin, Sojaöl, Glycerindiacetat, Glycerinmonoacetat oder Mischungen hieraus als vorteilhaft erwiesen. Besonders vorteilhaft hat sich hier die Verwendung von Glycerintriacetat als Verbindung B erwiesen.

Bevorzugt liegt der Polymeranteil des Gemischs, aus dem die Lösung ausgebildet wird, bei 30-60 Gew.-% und der Anteil des Lösemittelsystems, bestehend aus den Verbindungen A und B, bei 70-40 Gew.-%. Besonders bevorzugt liegt der Polymeranteil bei 35-50 Gew.-% und der Anteil der Verbindungen A und B bei 65-50 Gew.-%. Gegebenenfalls können der Polymerkomponente, den Verbindungen A und B oder auch der Polymerlösung weitere Stoffe wie z.B. Antioxidantien, Keimbildungsmittel, Füllstoffe, Komponenten zur Verbesserung der Biokompatibilität, d.h. der Blutverträglichkeit bei Einsatz der Membran bei der Oxygenation, z.B. Vitamin E, und ähnliche als Additive zugegeben werden.

Die aus der Polymerkomponente und dem Lösemittelsystem ausgebildete Polymerlösung wird mittels geeigneter Formwerkzeuge zum Formkörper ausgeformt, um schließlich eine Membran vorzugsweise in Form einer Flachmembran oder Hohlfasermembran zu erhalten. Dabei können übliche Formwerkzeuge wie Breitschlitzdüsen, Gießkästen, Rakel, profilierte Düsen, Ringschlitzdüsen oder Hohlfadendüsen eingesetzt werden.

Vorzugsweise werden mittels des erfindungsgemäßen Verfahrens Hohlfasermembranen hergestellt. Im diesem Fall wird die Polymerlösung durch den Ringspalt der entsprechende Hohlfadendüsen zum Formkörper, d.h. zum Hohlfaden extrudiert. Durch die zentrale Bohrung der Hohlfadendüse wird ein Fluid dosiert, das als Innenfüllung fungiert, die das Lumen der Hohlfasermembran ausbildet und stabilisiert. Der extrudierte Hohlfaden bzw. die resultierende Hohlfasermembran weist dann eine dem Lumen zugewandte Oberfläche, die Innenoberfläche, und eine dem Lumen abgewandte, durch die Wand des Hohlfadens bzw. der Hohlfasermembran von der Innenoberfläche getrennte Oberfläche, die Außenoberfläche auf.

Nach seiner Ausformung wird.der Formkörper so mittels eines festen oder flüssigen Abkühlmediums abgekühlt, dass eine thermodynamische Nichtgleichgewichts-flüssig-flüssig-Phasentrennung im Formkörper, d.h. in der ausgeformten Polymerlösung erfolgt und im weiteren die Polymerstruktur erstarrt und verfestigt. Dabei ist das Abkühlmedium auf eine Temperatur unterhalb der Erstarrungstemperatur temperiert. Erfindungsgemäß ist zur Erzeugung der gewünschten integral asymmetrischen Membran mit Trennschicht als Abkühlmedium ein solches Medium einzusetzen, das die Polymerkomponente auch bei Aufheizen des Mediums auf die Werkzeugtemperatur nicht löst und chemisch nicht mit ihm reagiert. Die Verwendung eines derartigen Abkühlmediums ist maßgeblich verantwortlich für die Ausbildung einer Trennschicht mit dichterer Struktur. Eine derartige Anforderung an das Abkühlmedium schließt z.B. den Einsatz der als Lösemittelsystem verwendeten Mischung der Verbindungen A und B als Abkühlmedium aus. Ein solches System würde zwar die Polymerkomponente bei der Abkühltemperatur nicht lösen. Bei der Werkzeugtemperatur jedoch bildet diese Mischung mit der Polymerkomponente, wie oben ausgeführt, eine homogene Lösung aus.

Bei der Herstellung von Flachmembranen kann das Abkühlmedium auch ein fester Stoff bzw. eine feste Oberfläche sein, z.B. in Form einer Glasplatte oder einer Metallplatte oder in Form einer entsprechend temperierten bzw. gekühlten Kühlwalze, auf die der Formkörper abgelegt wird. Vorzugsweise hat das feste Abkühlmedium eine hohe Wärmeleitfähigkeit und besteht besonders bevorzugt aus einem metallischen Werkstoff.

In einer vorteilhaften Ausgestaltung des erfindungsgemäßen Verfahrens wird jedoch ein Abkühtmedium eingesetzt, das eine Flüssigkeit ist. Besonders bevorzugt ist die als Abkühlmedium eingesetzte Flüssigkeit ein Nichtlöser für die Polymerkomponente, d.h. sie löst die Polymerkomponente beim Erwärmen bis höchstens zu ihrem Siedepunkt nicht zu einer homogenen Lösung. Die als Abkühlmedium eingesetzte Flüssigkeit kann auch eine Komponente enthalten, die ein Löser für die Polymerkomponente ist, oder sie kann auch eine Mischung aus verschiedenen Nichtlösern sein, solange sie insgesamt die Polymerkomponente bei Temperaturen bis mindestens zur Werkzeugtemperatur nicht löst. Hierbei ist zu beobachten, dass die Stärke des Nichtlösecharakters des Abkühlmediums die Dichtheit der sich ausbildenden Trennschicht beeinflusst. In einer besonders bevorzugten Ausführung des erfindungsgemäßen Verfahrens wird daher als Abkühlmedium eine Flüssigkeit verwendet, welche ein starker Nichtlöser für die Polymerkomponente ist. Hinsichtlich der Definitionen von Nichtlöser und starkem Nichtlöser sei auf die Ausführungen verwiesen, die im Zusammenhang mit der Verbindung B gemacht wurden. Vorzugsweise ist das Abkühlmedium bei der Abkühltemperatur eine homogene, einphasige Flüssigkeit. Hierdurch ist die Herstellung von Membranen mit besonders homogenen Oberflächenstrukturen gewährleistet.

Als flüssiges Abkühlmedium kann ein solches eingesetzt werden, welches mit dem Lösemittelsystem zu einer homogenen Lösung mischbar ist oder ein solches, welches die das Lösemittelsystem ausbildenden Verbindungen nicht löst. Vorteilhafterweise enthält das flüssige Abkühlmedium die Verbindung B.

Zur Einleitung einer thermodynamischen Nichtgleichgewichts-flüssig-flüssig-Phasentrennung muß die Temperatur des Abkühlmediums deutlich unterhalb der kritischen Entmischungstemperatur oder Phasentrenntemperatur der verwendeten Polymerlösung und zur Erstarrung der polymerreichen Phase unterhalb der Erstarrungstemperatur liegen. Hierbei wird die Ausbildung der Trennschicht unterstützt, wenn ein möglichst großer Abstand zwischen der Entmischungstemperatur und der Temperatur des Abkühlmediums besteht. Vorzugsweise weist das Abkühlmedium eine Temperatur auf, die um mindestens 100°C unterhalb der Phasentrenntemperatur liegt, und besonders bevorzugt eine Temperatur, die um mindestens 150 °C unterhalb der Phasentrenntemperatur liegt. Es ist von besonderem Vorteil, wenn dabei die Temperatur des Abkühlmediums kleiner als 50°C ist. In Einzelfällen kann eine Kühlung auf Temperaturen unterhalb der Raumtemperatur erforderlich sein. Es ist auch möglich, die Abkühlung abgestuft in mehreren Schritten durchzuführen.

Vorzugsweise befindet sich das flüssige Abkühlmedium in einem Schacht oder in einem Spinnrohr, den bzw. das der Formkörper zur Abkühlung dann durchläuft. Hierbei werden das Abkühlmedium und der Formkörper in der Regel in die gleiche Richtung durch den Schacht bzw. das Spinnrohr geführt. Formkörper und Abkühlmedium können mit gleicher oder unterschiedlicher linearer Geschwindigkeit durch das Spinnrohr geführt werden, wobei je nach Erfordernis entweder der Formkörper oder das Abkühlmedium die höhere lineare Geschwindigkeit aufweisen kann. Derartige Verfahrensvarianten werden beispielsweise in der DE-A-28 33 493 oder in der EP-A-133 882 beschrieben.

Die bei der Extrusion von Hohlfäden eingesetzte Innenfüllung kann gasförmig sein oder sie kann eine Flüssigkeit sein. Im Falle der Verwendung einer Flüssigkeit als Innenfüllung muß eine Flüssigkeit ausgewählt werden, welche die Polymerkomponente in der ausgeformten Polymerlösung unterhalb der kritischen Entmischungstemperatur der Polymerlösung im wesentlichen nicht löst. Im übrigen können die gleichen Flüssigkeiten zum Einsatz kommen, wie sie auch als Abkühlmedium verwendet werden können. Auf diese Weise lassen sich auch Hohlfasermembranen herstellen, die sowohl an ihrer Außenseite als auch an ihrer Innenseite eine Trennschicht aufweisen oder auch Hohlfasermembranen, die nur an ihrer Innenseite eine Trennschicht aufweisen. Bevorzugt handelt es sich bei der Innenfüllung dann um einen Nichtlöser für die Polymerkomponente und besonders bevorzugt um einen starken Nichtlöser für die Polymerkomponente. Die Innenfüllung kann dabei mit dem Lösemittelsystem zu einer homogenen einphasigen Lösung mischbar sein. Im Falle, dass die Innenfüllung gasförmig ist, kann es sich um Luft, einen dampfförmigen Stoff oder bevorzugt um Stickstoff oder um andere Inertgase handeln.

Es ist von Vorteil, wenn Austrittsfläche des Formwerkzeugs und Oberfläche des Abkühlmediums durch einen Spalt räumlich beabstandet sind, der von dem Formkörper vor dem Kontakt mit dem Abkühlmedium durchlaufen wird. Es kann sich dabei um einen Luftspalt handeln, der Spalt kann aber auch mit einer anderen gasförmigen Atmosphäre gefüllt sein, und er kann auch beheizt oder gekühlt sein. Die Polymerlösung kann aber auch nach Austritt aus dem Formwerkzeug direkt mit dem Abkühlmedium in Kontakt gebracht werden.

In einer vorteilhaften Ausgestaltung des erfindungsgemäßen Verfahrens wird der aus dem Formwerkzeug austretende Formkörper, d.h. die aus dem Formwerkzeug austretende, ausgeformte Polymerlösung, vor der Abkühlung zumindest mit einer seiner Oberflächen, vorzugsweise mit derjenigen Oberfläche, an der die Trennschicht ausgebildet werden soll, einer die Verdampfung der Verbindung A und/oder der Verbindung B fördernden gasförmigen Atmosphäre ausgesetzt, d.h. einer Atmosphäre, in der die Verdampfung der Verbindung A und/oder der Verbindung B möglich ist. Bevorzugt wird zur Ausbildung der gasförmigen Atmosphäre Luft eingesetzt. Ebenso bevorzugt werden Stickstoff oder andere Inertgase eingesetzt oder auch dampfförmige Medien. Vorteilhafterweise ist die gasförmige Atmosphäre klimatisiert, und die gasförmige Atmosphäre hat in der Regel eine Temperatur, die unterhalb der Werkzeugtemperatur liegt. Um dabei einen genügenden Anteil an den Verbindungen A und/oder Verbindung B verdampfen zu können, wird der Formkörper mit zumindest einer seiner Oberflächen bevorzugt während mindestens 0,5 ms der gasförmigen Atmosphäre ausgesetzt.

Zur Bereitstellung der die Verdampfung der Verbindung A und/oder der Verbindung B fördernden gasförmigen Atmosphäre können, beispielsweise bei Verwendung eines flüssigen Abkühlmediums zur Abkühlung des Formkörpers, Formwerkzeug und Abkühlmedium räumlich so beabstandet werden, dass sich dazwischen ein Spalt ausbildet, der die gasförmige Atmosphäre enthält und der vom Formkörper durchlaufen wird.

So kann etwa bei der Herstellung von Flachmembranen die z.B. durch eine Breitschlitzdüse extrudierte Polymerlösung als Flachfolie zunächst durch einen Spalt geführt werden, beispielsweise durch einen Luftspalt, bevor sie abgekühlt wird. In diesem Fall wird die Flachfolie allseitig, d.h. mit ihren beiden Oberflächen sowie ihren Seitenkanten von der gasförmigen Atmosphäre umgeben, und es wird bei der resultierenden Flachmembran an ihren beiden Oberflächen die Ausbildung der Trennschicht beeinflusst. Erfolgt die Extrusion der Flachfolie direkt auf einen beheizten Träger z.B. in Form einer Heizwalze und durchläuft die Flachfolie auf dem Träger anschließend noch eine bestimmte Strecke eine gasförmige Atmosphäre, bevor sie im Kühlmedium abgekühlt wird, so kommt nur eine Oberfläche der Flachfolie, nämlich die der Heizwalze abgewandte Oberfläche, mit der gasförmigen Atmosphäre in Verbindung, so dass nur an dieser Oberfläche die Ausbildung der Trennschicht durch eine Verdampfung beeinflusst wird.

Im Falle der Herstellung von Hohlfasermembranen kann der die Düse verlassende Hohlfaden ebenfalls durch einen Spalt geführt werden, der zwischen Düse und Abkühlmedium ausgebildet ist und der die gasförmige Atmosphäre enthält.

Im Einzelfall kann die Struktur der Trennschicht auch durch einen Verzug der ausgeformten Polymerlösung unterhalb der Düse, d.h. insbesondere im Luftspalt beeinflusst werden, wobei der Verzug durch Einstellung einer Differenz zwischen der Austrittsgeschwindigkeit der Polymerlösung aus dem Formwerkzeug und der Geschwindigkeit der ersten Abzugseinrichtung für den abgekühlten Formkörper erzeugt wird.

Nach Abkühlung und Verfestigung der Polymerstruktur werden die Verbindungen A und B in der Regel aus dem Formkörper entfernt. Die Entfernung kann beispielsweise durch Extraktion erfolgen. Vorzugsweise werden dabei solche Extraktionsmittel eingesetzt, die das Polymer bzw. die Polymere nicht lösen, die jedoch mischbar mit den Verbindungen A und B sind. Anschließend kann eine Trocknung bei erhöhten Temperaturen erforderlich sein, um das Extraktionsmittel aus der Membran zu entfernen. Brauchbare Extraktionsmittel sind Aceton, Methanol, Ethanol und bevorzugt Isopropanol.

In manchen Fällen kann es auch zweckmäßig sein, die beiden Verbindungen A und B entweder beide oder jeweils eine zumindest teilweise im Formkörper zu belassen und nur eine der Verbindungen oder gar keine der Verbindungen zu extrahieren. Auch weitere als Additive den Verbindungen A und/oder B zugegebene Komponenten können in der Membranstruktur verbleiben und so ebenfalls z.B. als funktionelle Wirkflüssigkeiten dienen. Verschiedene Beispiele für funktionelle Wirkflüssigkeiten enthaltende mikroporöse Polymere werden in der DE-A 27 37 745 beschrieben.

Vor oder nach der Entfernung zumindest eines wesentlichen Teils des Lösemittelsystems kann eine geringfügige Verstreckung der Membran erfolgen, um insbesondere die Eigenschaften der Trennschicht in gezielter Weise zu modifizieren. Beispielsweise können in einer im wesentlichen dichten Trennschicht durch die Verstreckung Poren erzeugt und/oder die Porengröße der Trennschicht auf die im speziellen Anwendungsfall der resultierenden Membran erforderliche Größe eingestellt werden.

Bei Herstellung von Membranen für die Langzeitoxygenation muss jedoch darauf geachtet werden, dass die Poren eine mittlere Porengröße von maximal 100 nm nicht überschreiten, damit ein früher Flüssigkeitsdurchbruch vermieden werden kann. Daher sollte bei Herstellung der erfindungsgemäßen Membranen die Verstreckung in der Regel 10 % nicht überschreiten. Die Verstreckung kann nach Erfordernis auch in mehrere Richtungen erfolgen und wird vorteilhafterweise unter erhöhten Temperaturen vorgenommen. Beispielsweise kann eine solche Verstreckung auch während einer gegebenenfalls erforderlichen Trocknung der Membran nach der Extraktion durchgeführt werden.

Durch Einstellung der Porengröße der Trennschicht z.B. über einen nachgeschalteten Verstreckungsschritt lassen sich mittels des erfindungsgemäßen Verfahrens also auch Membranen für die Nanofiltration oder für die Ultrafiltration herstellen.

Das erfindungsgemäße Verfahren lässt sich bevorzugt zur Herstellung von hydrophoben integral asymmetrischen Membranen insbesondere für die Gastrennung oder für den Gasaustausch einsetzen, wobei die Membranen hauptsächlich aus mindestens einem Polymer, ausgewählt aus der Gruppe der Polyolefine, zusammengesetzt sind, eine erste und eine zweite Oberfläche aufweisen sowie eine dazwischenliegende Stützschicht, die eine schwammartige, offenporige mikroporöse Struktur besitzt, und zu dieser Stützschicht benachbart an mindestens einer der Oberflächen eine Trennschicht mit dichterer Struktur, wobei die Trennschicht höchstens Poren mit einem mittleren Durchmesser <100 nm aufweist, die Stützschicht frei von Makrovoids ist, die Poren in der Stützschicht im Mittel im wesentlichen isotrop sind und die Membran eine Porosität im Bereich von größer als 30 Vol.-% bis kleiner 75 Vol.-% aufweist. Daher betrifft die Erfindung des Weiteren eine derartige Membran, die mittels des erfindungsgemäßen Verfahrens herstellbar ist. Besonders bevorzugt weisen die mittels des erfindungsgemäßen Verfahrens hergestellten Membranen eine dichte Trennschicht auf.

Unter dem mittleren Durchmesser der Poren in der Trennschicht wird dabei der Mittelwert aus den Durchmessern der Poren in der Oberfläche verstanden, die als Trennschicht ausgebildet ist, wobei eine rasterelektronenmikroskopische Aufnahme bei 60000-facher Vergrößerung zugrunde gelegt wird. Bei der bildanalytischen Auswertung wird für die Poren eine kreisrunde Fläche angenommen. Der mittlere Porendurchmesser ergibt sich als arithmetischer Mittelwert aller auf einer Membranfläche von ca. 8 μm x 6 μm bei 60000-facher Vergrößerung sichtbaren Poren. Bei den erfindungsgemäß hergestellten Membranen vorhandene Poren in der Oberfläche, die die Trennschicht aufweist, sind gleichmäßig, d.h. homogen über diese Oberfläche verteilt.

Diese Membranen zeichnen sich aufgrund ihrer Struktur durch hohe Gasflüsse und hohe Gastransferraten bei gleichzeitig hoher Sicherheit gegenüber einem Durchbruch der Flüssigkeit, von der bei Anwendung der erfindungsgemäßen Membran zum Gastransfer eine gasförmige Komponente abgetrennt oder der eine gasförmige Komponente hinzugefügt werden soll, sowie durch gute mechanische Eigenschaften aus. Hierzu weist die Membran eine hohe Volumenporosität auf, wobei diese im wesentlichen durch die Struktur der Stützschicht bestimmt ist, und eine definierte Trennschicht mit geringer Dicke.

Die Stützschicht der mittels des erfindungsgemäßen Verfahrens hergestellten Membranen kann, wie bereits ausgeführt, von unterschiedlicher Struktur sein. In einer Ausführungsform weist die Stützschicht eine schwammartige zellförmige und offenporige Struktur auf, bei der die Poren als umschlossene Mikrozellen beschrieben werden können, die von Kanälen, kleineren Poren oder Durchlässen miteinander verbunden sind. In einer weiteren Ausführungsform weist die Stützschicht eine nichtzellförmige Struktur auf, bei der die Polymerphase und die Poren sich durchdringende Netzwerkstrukturen ausbilden. In jedem Fall ist aber die Stützschicht frei von Makrovoids, also frei von solchen Poren, die in der Literatur auch häufig als Fingerporen oder Kavernen bezeichnet werden.

Die Poren der Stützschicht können jede beliebige Geometrie aufweisen und z.B. von länglicher, zylindrischer, runder Form oder auch von einer mehr oder weniger unregelmäßigen Gestalt sein. Bei den mittels des erfindungsgemäßen Verfahrens bevorzugt hergestellten Membranen sind die Poren in der Stützstruktur im Mittel im wesentlichen isotrop. Hierunter ist zu verstehen, dass, wenngleich die einzelnen Poren auch eine längliche Form besitzen können, über alle Poren gemittelt die Poren in alle Raumrichtungen im wesentlichen gleiche Ausdehnung aufweisen, wobei Abweichungen zwischen den Ausdehnungen in den einzelnen Raumrichtungen von bis zu 20% eingeschlossen sind.

Bei einer zu geringen Volumenporosität, d.h. einem zu geringen Anteil an Poren bezogen auf das Gesamtvolumen der Membran sind die erreichbaren Gasflüsse und Gastransferraten zu gering. Andererseits führt ein zu hoher Anteil an Poren in der Membran zu mangelhaften mechanischen Eigenschaften, und die Membran läßt sich in nachfolgenden Verarbeitungprozessen nicht mehr problemlos verarbeiten. Mittels des erfindungsgemäßen Verfahrens lassen sich vorzugsweise Membranen mit einer Volumenporosität im Bereich von größer als 30 Vol.-% bis kleiner als 75 Vol.-%, und besonders bevorzugt im Bereich von größer als 50 Vol.-% bis kleiner als 75 Vol.-% herstellen.

Dabei können die so hergestellten Membranen nur an einer ihrer Oberflächen eine Trennschicht aufweisen, sie können jedoch auch an ihren beiden Oberflächen eine Trennschicht aufweisen. Die Trennschicht hat einerseits Einfluss auf die Transferraten bzw. die Gasflüsse, anderseits aber auch auf die Durchbruchzeit, d.h. auf die Zeitspanne, die die Membranen gegenüber einem Durchbruch der Flüssigkeit, von der bei Anwendung der Membran eine gasförmige Komponente abgetrennt oder der eine gasförmige Komponente hinzugefügt werden soll, oder gegenüber einem Durchbruch von in der Flüssigkeit enthaltenen Komponenten sicher sind. So resultieren bei einer dichten Trennschicht sehr lange Durchbruchzeiten, jedoch sind die Transferraten in ihrer Größe begrenzt, da in dichten Membranschichten der Gastransfer allein über eine vergleichsweise langsame Lösungs-Diffusion erfolgt im Unterschied zum wesentlich größeren Knudsen Fluss in porösen Strukturen. Im Falle einer nanoporösen Trennschicht hingegen sind die Gastransferraten gegenüber einer dichten Trennschicht erhöht, jedoch können sich aufgrund der Poren dann kürzere Durchbruchzeiten ergeben.

Dabei darf die Dicke der Trennschicht nicht zu gering sein, da hierdurch die Gefahr für Fehlstellen und damit z.B. für einen Durchbruch erhöht wird. Allerdings ist auch dann bei den mittels des erfindungsgemäßen Verfahrens hergestellten Membranen die Zeit bis zu einem tatsächlichen Durchbruch dennoch relativ lang, da bei diesen Membranen keine bevorzugte Richtung für den Fluss einer Flüssigkeit vorliegt, sondern der von der Flüssigkeit zurückzulegende Weg aufgrund der Porenstruktur sehr gewunden ist. Im Unterschied hierzu sind die Membranen zu sehen, die nach dem erwähnten Schmelz-Streckverfahren hergestellt sind und bei denen aufgrund der ausgeprägten Anisotropie der Poren eine bevorzugte Richtung für den Fluss von Flüssigkeiten von der einen Oberfläche zur anderen resultiert.

Während bei zu geringen Dicken der Trennschicht die Gefahr für Fehlstellen zu groß wird, werden andererseits bei einer zu großen Trennschichtdicke die Transferraten oder Gasflüsse zu gering. Bevorzugt liegt daher die Dicke der Trennschicht zwischen 0,01 μm und 5 μm und besonders bevorzugt zwischen 0,1 μm und 2 μm. Hervorragend geeignet sind erfindungsgemäße Membranen mit einer Trennschichtdicke zwischen 0,1 μm und 0,6 μm. Die Dicke der Trennschicht kann für die nach dem erfindungsgemäßen Verfahren hergestellten Membranen auf einfache Weise durch Ausmessen der Schicht anhand von mittels Rasterelektronenmikroskopie erstellten Bruchbildern oder mittels Transmissionselektronenmikroskopie erstellten Ultradünnschnittcharakterisierungen ermittelt werden.

Die mittels des erfindungsgemäßen Verfahren bevorzugt hergestellten Membranen weisen aufgrund der Ausbildung der Trennschicht in Verbindung mit der hohen Porosität der Membranen eine für den Einsatz zur Blutoxygenation genügend hohe Permeabilität der Membranen auf und erzielen damit genügend hohe Gasflüsse. Für den Gasfluss Q für $CO_2$, $Q(CO_2)$, werden Werte von mindestens 1 ml/($cm^2$*min*bar) erreicht.

Eine wichtige Anwendung der mittels des erfindungsgemäßen Verfahrens herstellbaren Membranen ist die Oxygenation von Blut. Bei diesen Anwendungen spielt, wie bereits ausgeführt wurde, die Plasmadurchbruchzeit eine Rolle, d.h. die Zeit, die die Membran gegenüber einem Durchbruch von Blutplasma stabil ist. Hierbei ist hervorzuheben, dass ein Plasmadurchbruch ein wesentlich komplexerer Vorgang ist als das bloße Durchdringen einer hydrophilen Flüssigkeit durch eine hydrophobe Membran. Nach gängiger Lehrmeinung wird ein Plasmadurchbruch dadurch hervorgerufen, dass zunächst durch im Blut enthaltene Proteine und Phospholipide eine Hydrophilierung des Porensystems der Membran erfolgt und in einem nachgelagerten Schritt schlagartig ein Eindringen von Blutplasma in das hydrophilierte Porensystem stattfindet. Als kritische Größe für einen Flüssigkeitsdurchbruch wird daher die Plasmadurchbruchzeit angesehen. Die erfindungsgemäßen Membranen weisen bevorzugt eine Plasmadurchbruchzeit von mindestens 20 Stunden, besonders bevorzugt eine Plasmadurchbruchzeit von mindestens 48 Stunden auf.

Generell erfolgt bei den erfindungsgemäß hergestellten Membranen der Übergang von der porösen Stützschicht zur Trennschicht in einem engen Bereich der Membranwand. Bei einer bevorzugten Ausführungsform der mittels des erfindungsgemäßen Verfahrens hergestellten Membran ändert sich die Membranstruktur beim Übergang von der Trennschicht zur Stützschicht abrupt, d.h. die Membranstruktur wechselt im wesentlichen übergangslos und sprunghaft von der mikroporösen Stützschicht zur Trennschicht. Membranen mit einer derartigen Struktur weisen gegenüber solchen Membranen mit einem langsamen, graduellen Übergang von der Trennschicht zur Stützschicht den Vorteil einer höheren Durchlässigkeit der Stützschicht für zu transferierenden Gase aus, da die Stützschicht in ihrem an die Trennschicht angrenzenden Bereich weniger kompakt ist.

In einer bevorzugten Ausführungsform sind die mittels des erfindungsgemäßen Verfahrens hergestellten Membranen Flachmembranen, wobei diese vorzugsweise eine Dicke zwischen 10 und 300 μm, besonders bevorzugt zwischen 30 und 150 μm besitzen. In einer ebenfalls bevorzugten Ausführungsform sind die mittels des erfindungsgemäßen Verfahrens hergestellten Membranen Hohlfasermembranen. Je nach Ausführung können diese eine Trennschicht nur an ihrer Innenoberfläche, d.h. an ihrer dem Lumen zugewandten Oberfläche, oder nur an ihrer Außenoberfläche, d.h. der dem Lumen abgewandten Oberfläche aufweisen oder aber sowohl an ihrer Innenoberfläche als auch an ihrer Außenoberfläche eine Trennschicht besitzen. Vorzugsweise befindet sich die Trennsicht an der Außenoberfläche. Diese Hohlfasermembranen weisen bevorzugt einen Außendurchmesser zwischen 30 und 3000 μm, besonders bevorzugt einen Außendurchmesser zwischen 50 und 500 μm auf. Günstig ist eine Wanddicke der Hohlfasermembran zwischen 5 und 150 μm, besonders günstig eine Dicke zwischen 10 und 100 μm.

Mittels des erfindungsgemäßen Verfahren lassen sich problemlos Hohlfasermembranen mit hervorragenden mechanischen Eigenschaften herstellen, insbesondere mit einer Bruchkraft von mindestens 70 cN und einer Bruchdehnung von mindestens 75%, wodurch eine problemlose Weiterverarbeitung in nachfolgenden textilen Verarbeitungsschritten möglich ist. So hat es sich bei Verwendung von Hohlfasermembranen als günstig in Bezug auf die Leistungscharakteristik daraus hergestellter Membranmodule erwiesen, wenn die Hohlfasermembranen zunächst beispielsweise mittels geeigneter Wirkverfahren zu Matten aus zueinander im wesentlichen parallelen Hohlfasermembranen verarbeitet werden, aus denen dann entsprechende Bündel hergestellt werden. Damit sind textile Verarbeitungsverfahren verbunden, die hohe Anforderungen an die mechanischen Eigenschaften der Membranen stellen, insbesondere an die Festigkeit und die Dehnung. Diese Anforderungen werden von den erfindungsgemäß hergestellten Membranen erfüllt.

Mittels des erfindungsgemäßen Verfahrens lassen sich also je nach Ausführung auf der einen Seite Membranen für Gastrennaufgaben, bei denen beispielsweise eine einzelne Gaskomponente selektiv aus einer Mischung von mindestens zwei Gasen abgetrennt oder eine einzelne Gaskomponente in einer Mischung von mindestens zwei Gasen angereichert wird, oder für Gastransferaufgaben einsetzen, bei denen selektiv ein Gas, das in einer Flüssigkeit gelöst ist, aus dieser Flüssigkeit entfernt wird, und/oder ein Gas aus einer Mischung von Gasen in einer Flüssigkeit gelöst wird. Auf der anderen Seite lassen sich durch Einstellung der Porengröße der Trennschicht z.B. in einem nachgeschalteten Verstreckungsschritt auch Membranen für die Nanofiltration wie z.B. für die Abtrennung niedermolekularer Substanzen bevorzugt aus nicht-wässrigen Medien oder für die Ultrafiltration wie z.B. für die Behandlung von Frischwasser, Abwasser oder Prozesswasser oder auch für Anwendungen im Bereich der Lebensmittel- oder der Milchindustrie.

Die Erfindung soll anhand der nachfolgenden Beispiele und Figuren näher erläutert werden. Es zeigen:

Fig. 1 : Rasterelektronenmikroskop (REM) -Aufnahme einer Membran gemäß Beispiel 1 mit 9000-facher Vergrößerung; Membranoberfläche, die während der Membranherstellung der Glasseite zugewandt war

Fig. 2:    REM-Aufnahme einer Membran gemäß Beispiel 1 bei 3000-facher Vergrößerung; Bruchkante der Membran zwischen Membranwand und derjenigen Oberfläche, die während der Membranherstellung der Glasseite zugewandt war

Fig. 3:    REM-Aufnahme der äußeren Oberfläche einer Hohlfasermembran gemäß Beispiel 2 bei 6000-facher Vergrößerung

Fig. 4:    REM-Aufnahme der Bruchfläche senkrecht zur Längsachse einer Hohlfasermembran gemäß Beispiel 2 im Wandinneren bei 3000-facher Vergrößerung

Fig. 5:    REM-Aufnahme einer Membran gemäß Beispiel 3 bei 3000-facher Vergrößerung; Bruchkante der Membran zwischen Membranwand und derjenigen Oberfläche, die während der Membranherstellung der Glasseite zugewandt war

Fig. 6 :    REM-Aufnahme einer Membran gemäß Beispiel 3 mit 9000-facher Vergrößerung; Membranoberfläche, die während der Membranherstellung der Glasseite zugewandt war

Fig. 7:    REM-Aufnahme der äußeren Oberfläche einer Hohlfasermembran gemäß Beispiel 4 bei 60000-facher Vergrößerung

Fig. 8:    REM-Aufnahme der Bruchfläche senkrecht zur Längsachse einer Hohlfasermembran gemäß Beispiel 4 im Bereich ihrer Außenseite bei 13500-facher Vergrößerung

Fig. 9:    REM-Aufnahme der Bruchfläche senkrecht zur Längsachse einer Hohlfasermembran gemäß Beispiel 5 im Bereich ihrer Außenseite bei 13500-facher Vergrößerung

Fig. 10:    REM-Aufnahme der Bruchfläche senkrecht zur Längsachse einer Hohlfasermembran gemäß Vergleichsbeispiel 1 im Bereich ihrer Außenseite bei 3000-facher Vergrößerung

Fig. 11:    REM-Aufnahme der äußeren Oberfläche einer Hohlfasermembran gemäß Vergleichsbeispiel 2 bei 9000-facher Vergrößerung

Fig. 12:    REM-Aufnahme der Bruchfläche senkrecht zur Längsachse einer Hohlfasermembran gemäß Vergleichsbeispiel 2 im Bereich ihrer Außenseite bei 13500-facher Vergrößerung

Fig. 13:    REM-Aufnahme einer Membran gemäß Vergleichsbeispiel 3 bei 3000-facher Vergrößerung; Bruchkante der Membran zwischen Membranwand und derjenigen Oberfläche, die während der Membranherstellung der Glasseite zugewandt war

Fig. 14:    REM-Aufnahme einer Membran gemäß Vergleichsbeispiel 3, welche bei 9000-facher Vergrößerung die Membranoberfläche zeigt, die während der Membranherstellung der Glasseite zugewandt war

Fig. 15:    REM-Aufnahme einer Membran gemäß Vergleichsbeispiel 4 bei 3000-facher Vergrößerung; Bruchkante der Membran zwischen Membranwand und derjenigen Oberfläche, die während der Membranherstellung der Glasseite zugewandt war

In den Beispielen wurden die folgenden Methoden zur Charakterisierung der erhaltenen Membranen angewandt:

Qualitativer Test der Dichtigkeit der Membranoberfläche:

Ein Tropfen Isopropanol, welches zur besseren Erkennbarkeit der Effekte blau eingefärbt wurde, wird auf die Oberfläche einer Membranprobe gegeben. Das Eindringverhalten des Isopropanoltropfens in die Membranoberfläche wird visuell beobachtet und gibt qualitativ Aufschluss über die Dichtigkeit der Membranoberfläche und damit über das Vorhandensein einer Trennschicht mit dichterer Struktur. Hierbei dringt bei einer offenporigen Oberfläche der Isopropanoltropfen sofort in die Membranoberfläche ein und färbt diese blau. Eine dichte Oberfläche erlaubt keine spontane Benetzung mit Isopropanol.

<u>Bestimmung der Plasmadurchbruchzeit:</u>

Zur Bestimmung der Plasmadurchbruchzeit wird eine auf 37°C temperierte Phospholipidlösung (1,5 g L-α-Phosphatidy-LCholine in 500 ml physiologischer Kochsalzlösung gelöst) bei einem Druck von 1.0 bar mit einem Fluß von 6 l/(min*2m$^2$) an der einen Oberfläche einer Membranprobe entlanggeführt. An der anderen Oberfläche der Membranprobe wird Luft entlangströmen lassen, die nach Verlassen der Membranprobe durch eine Kühlfalle geleitet wird. Es wird das Gewicht der in der Kühlfalle gesammelten Flüssigkeit als Funktion der Zeit gemessen. Die Zeit, die bis zum signifikanten Ansteigen des Gewichts, d.h. bis zur ersten signifikanten Flüssigkeitsansammlung in der Kühlfalle vergeht, wird als Plasmadurchbruchzeit bezeichnet.

<u>Bestimmung der Volumenporosität:</u>

Eine Probe von mindestens 0,5 g der zu untersuchenden Membran wird trocken eingewogen. Die Membranprobe wird anschließend in eine das Membranmaterial benetzende, jedoch nicht quellende Flüssigkeit für 24 Stunden eingelegt, so dass die Flüssigkeit in alle Poren eindringt. Dies lässt sich visuell daran erkennen, dass die Membranprobe von einem opaken in einen glasigen, transparenten Zustand übergeht. Anschließend wird die Membranprobe aus der Flüssigkeit entnommen, an der Membranprobe anhaftende Flüssigkeit durch Zentrifugieren bei ca. 1800 g entfernt und die Masse der so vorbehandelten nassen, d.h. flüssigkeitsgefüllten Membranprobe bestimmt.
Die Volumenporosität in % wird nach folgender Formel bestimmt:

$$\text{Volumenporosität [\%]} = 100 * \frac{(m_{nass} - m_{trocken})/\rho_{Flüss.}}{(m_{nass} - m_{trocken})/\rho_{Flüss.} + m_{trocken}/\rho_{Polymer}}$$

wobei bedeuten:

$m_{trocken}$ = Gewicht der trockenen Membranprobe

$m_{nass}$ = Gewicht der nassen, flüssigkeitsgefüllten Membranprobe

$\rho_{Flüss}$ = Dichte der verwendeten Flüssigkeit

$\rho_{Polymer}$ = Dichte des Membranpolymers

<u>Bestimmung des Gasflusses:</u>

Zur Bestimmung der Gasflüsse wird eine Membranprobe auf einer ihrer Seiten mit dem zu messenden Gas mit einem konstanten Prüfdruck von 2 bar beaufschlagt. Bei Hohlfasermembranen wird hierzu das Gas in das Lumen der Hohlfasermembran eingeleitet. Es wird der durch die Wand der Membranprobe hindurchtretende Volumenstrom des Gases ermittelt und bezüglich des Prüfdrucks sowie der vom Gas durchströmten Fläche der Membranprobe normiert. Bei Hohlfasermembranen wird hierbei die das Lumen umschließende Innenfläche der Membran eingesetzt.

<u>Beispiel 1:</u>

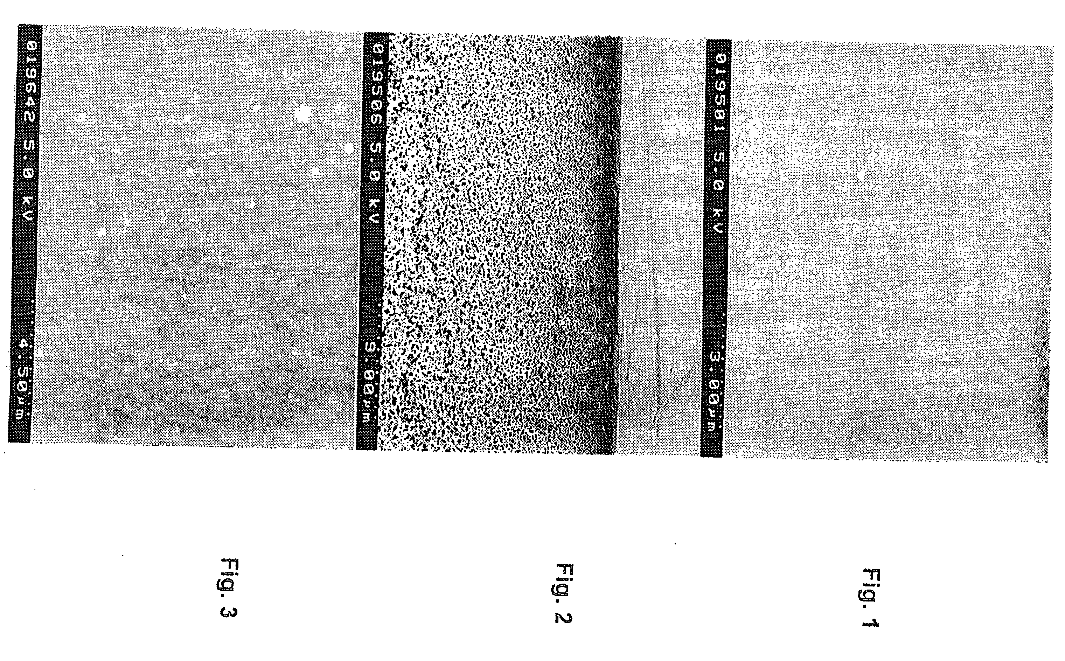

25 Gew.-% Poly-(4-methyl-1-penten) (TPX DX845) wurden bei ca. 255°C in 75 Gew.-% eines Gemischs aus 62 Gew.-% Dioctylphthalat und 38 Gew.-% Glycerintriacetat als Lösemittelsystem homogen gelöst. Die auf 255°C temperierte homogene Lösung wurde auf eine auf Raumtemperatur gehaltene Glasplatte mit Hilfe eines Rakels ausgerakelt, wobei der Abstand zwischen Rakel und Glasplatte 250 µm betrug. Nach Abkühlung und damit verbundener Phasenseparation wurde ein poröser Polymerfilm erhalten, der nachfolgend mit Isopropanol extrahiert und anschließend bei Raumtemperatur getrocknet wurde.
Die erhaltene Flachmembran wies an der Oberfläche, die während der Herstellung der Glasseite zugewandt war, eine dichte Trennschicht ohne Poren auf (Fig. 1). Unterhalb dieser dichten Schicht erstreckte sich eine schwammartige, offenporige mikroporöse Stützschicht (Fig. 2). Der qualitative Test zur Dichtigkeit der Oberfläche mittels Isopropanol ergab, dass die dichte Seite der Membran gemäß diesem Beispiel nicht spontan benetzt wurde.

<u>Beispiel 2:</u>

Die Polymerlösung aus Beispiel 1 wurde zur Herstellung einer Hohlfasermembran verwendet. Hierzu wurde die homogene Lösung durch eine Hohlfadendüse mit einem Aussendurchmesser des Ringspalts von 1,2 mm und einem Ringspalt von 350 μm extrudiert und nach einem Luftspalt von 10 cm durch Glycerintriacetat als Abkühlmedium geführt. Das Abkühlmedium wurde auf Raumtemperatur gehalten.

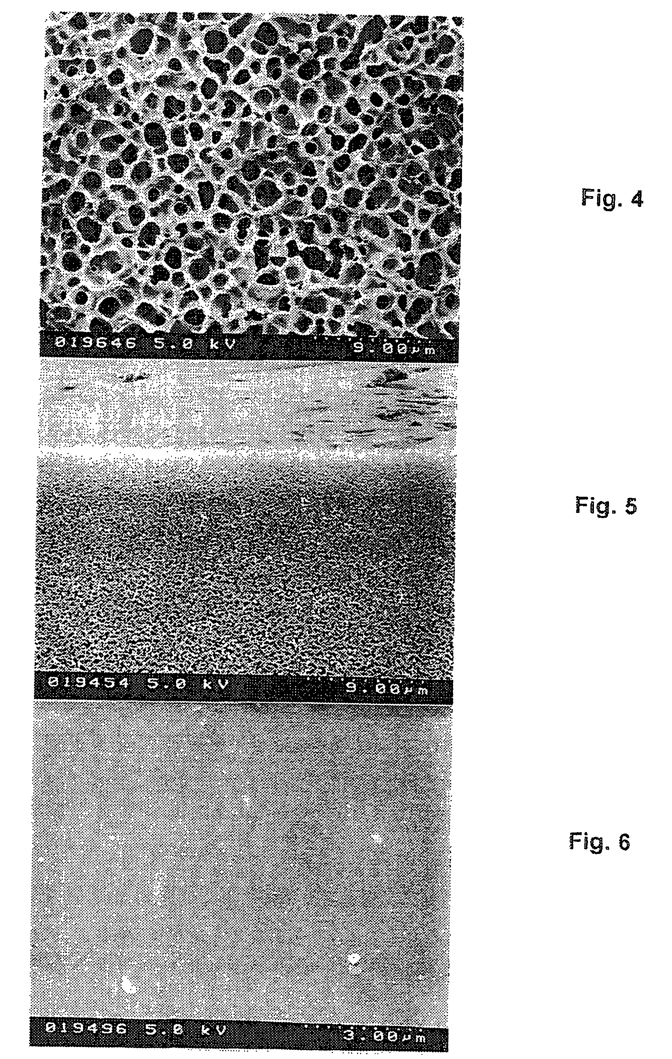

Es wurde eine Hohlfasermembran erhalten, die in der rasterelektronischen Aufnahme auf ihrer Außenseite eine dichte Trennschicht (Fig. 3) und in ihrem Wandinneren eine schwammartige offenporige mikroporöse Stützstruktur aufwies (Fig. 4). Die dichte Außenseite der Membran zeigte keine spontane Benetzbarkeit mit Isopropanol.

Beispiel 3:

Es wurde wie in Beispiel 1 vorgegangen, wobei eine Lösung von 25 Gew.-% Poly-(4-methyl-1-penten) in 75 Gew.-% eines Gemischs aus 93 Gew.-% Dioctylphthalat und 7 Gew.-% Glycerinmonoacetat als Lösemittelsystem verwendet wurde. Die auf 255°C temperierte homogene Lösung wurde auf eine auf Raumtemperatur gehaltene Glasplatte mit Hilfe eines Rakels ausgerakelt, dessen Abstand zur Glasplatte 250 μm betrug. Nach Abkühlung und damit verbundener Phasenseparation wurde ein poröser Polymerfilm erhalten, der nachfolgend mit Isopropanol extrahiert und anschließend bei Raumtemperatur getrocknet.

Im Ergebnis wurde eine Flachmembran erhalten, die an der Oberfläche, die während der Herstellung der Glasseite zugewandt war, eine dichte Trennschicht ohne Poren aufwies (Fig. 5 und Fig. 6). Die sich daran anschließende schwammartige, offenporige mikroporöse Stützschicht war an der Seite, die bei der Herstellung der Glasplatte abgewandt war, offenporig. Die dichte Seite war mit Isopropanol nicht spontan benetzbar.

Beispiel 4:

Poly-(4-methyl-1-penten) wurde in einem Extruder stufenweise bei von 265°C auf 300°C ansteigenden Temperaturen aufgeschmolzen und mittels einer Zahnradpumpe kontinuierlich einem dynamischen Mischer zugeführt. Das Lösemittelsystem, bestehend aus 70 Gew.-% Dioctylphthalat und 30 Gew.-% Glycerintriacetat, wurde mittels einer Dosierpumpe ebenfalls dem Mischer zugeführt, in dem das Polymer zusammen mit dem Lösemittelsystem bei einer Temperatur von 290°C zu einer homogenen Lösung mit einer Polymerkonzentration von 35 Gew.-% und einer Konzentration des Lösemittelsystems von 65 Gew.-% verarbeitet wurde. Diese Lösung wurde einer Hohlfadendüse mit einem Außendurchmesser von 1,2 mm und einem Ringspalt von 350 μm zugeführt und oberhalb der Phasentrenntemperatur bei 245°C zu einem Hohlfaden extrudiert. Als Innenfüllung wurde Stickstoff verwendet. Nach einer Luftstrecke von 25 mm durchlief der Hohlfaden ein ca. 1 m langes Spinnrohr, welches von auf 18°C temperiertem Glycerintriacetat als Abkühlmedium durchströmt wurde. Der infolge der Abkühlung im Spinnrohr verfestigte Hohlfaden wurde mit einer Abzugsgeschwindigkeit von 72 m/min aus dem Spinnrohr abgezogen, auf eine Spule aufgewickelt, anschließend zunächst mit Isopropanol extrahiert und danach bei ca. 120°C getrocknet.

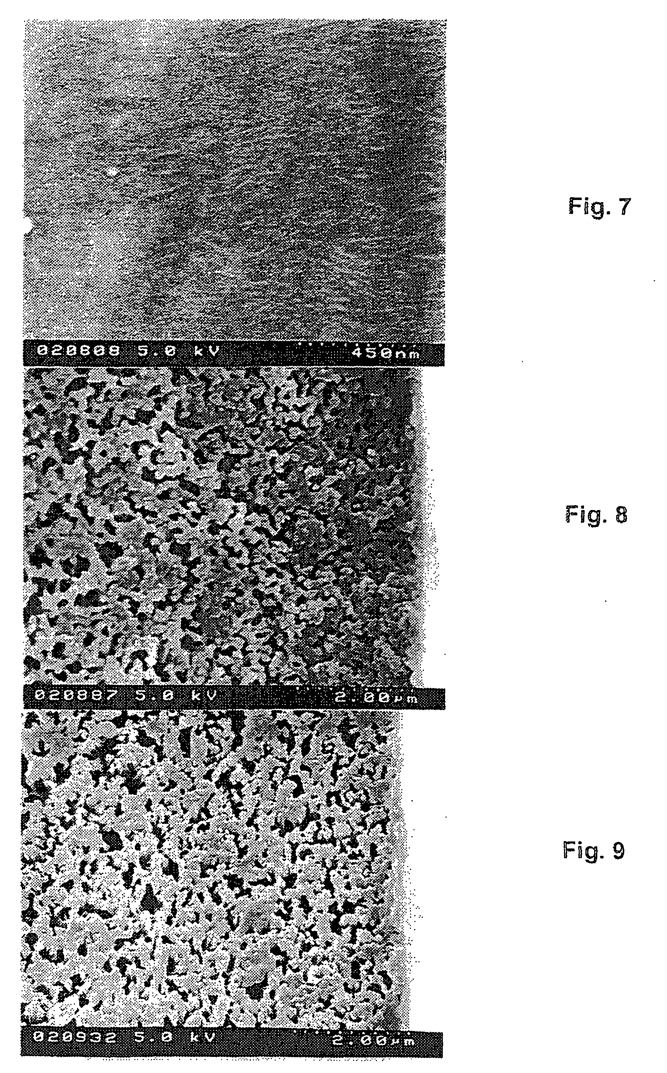

Es wurde eine Hohlfasermembran erhalten mit einem Außendurchmesser von 412 μm und einer Wandstärke von 93 μm, für die bei rasterelektronischer (REM-) Untersuchung auch bei einer Vergrößerung von 60 000 an ihrer äußeren Oberfläche keine Poren feststellbar waren (Fig. 7). Im Bruchbild einer Bruchfläche senkrecht zur Längsachse der Hohlfasermembran ist die schwammartige, offenporige mikroporöse Stützschicht erkennbar, die von der ca. 0,2 μm dicken Trennschicht abgedeckt wird (Fig. 8). Für die Membran gemäß diesem Beispiel wurde eine Volumenporosität von 57 % und ein $CO_2$-Fluss von 2,82 ml/(cm$^2$*min*bar) ermittelt. Die Membran wies eine Plasmadurchbruchzeit von mehr als 72 Stunden auf. Nach Erreichen dieser Zeit wurde die Prüfung abgebrochen.

Beispiel 5:

Polypropylen (Vestolen® P9000) wurde in einem Extruder stufenweise bei von 210°C auf 240°C ansteigenden Temperaturen aufgeschmolzen und mittels einer Zahnradpumpe kontinuierlich einem dynamischen Mischer zugeführt. Das Lösemittelsystem, bestehend aus 75 Gew.-% Sojaöl und 25 Gew.-% Rizinusöl, wurde mittels einer Dosierpumpe ebenfalls dem Mischer zugeführt, in dem das Polymer zusammen mit dem Lösemittelsystem während 6 min bei einer Temperatur von 240°C zu einer homogenen Lösung mit einer Polymerkonzentration von 38 Gew.-% und einer Konzentration des Lösemittelsystems von 62 Gew.-% verarbeitet wurde. Diese Lösung wurde einer Hohlfadendüse mit einem Außendurchmesser von 1,2 mm und einem Ringspalt von 350 μm zugeführt und oberhalb der Phasentrenntemperatur bei 232°C zu einem Hohlfaden extrudiert. Als Innenfüllung wurde Stickstoff verwendet. Nach einer Luftstrecke von 5 mm durchlief der Hohlfaden ein ca. 1 m langes Spinnrohr, welches von auf 18°C temperiertem Glycerintriacetat als Abkühlmedium durchströmt wurde. Der infolge der Abkühlung im Spinnrohr verfestigte Hohlfaden wurde mit einer Abzugsgeschwindigkeit von 72 m/min aus dem Spinnrohr abgezogen, auf eine Spule aufgewickelt, anschließend zunächst mit Isopropanol extrahiert und danach bei ca. 120°C getrocknet.

Die erhaltene Hohlfasermembran wies im Bruchbild einer Bruchfläche senkrecht zur Längsachse der Hohlfasermembran eine schwammartige, offenporige mikroporöse Stützstruktur auf, die zur Außenseite der Membran durch eine Trennschicht mit einer Dicke von ca. 0,3 μm abgedeckt war (Fig. 9). Ausweislich der REM-Untersuchung bei einer Vergrößerung von 60 000 waren an der äußeren Membranoberfläche einzelne Poren mit einer Größe bis ca. 0,1 μm feststellbar. Für die Membran gemäß diesem Beispiel hatte einen Außendurchmesser von 393 μm und eine Wandstärke von 80 μm. Sie wies eine Volumenporosität von größer als 55 Vol.-% und einen $CO_2$-Fluss von 74,5 ml/(cm$^2$*min*bar) auf.

Beispiel 6:

Es wurde wie in Beispiel 4 vorgegangen, wobei als Lösemittelsystem eine Mischung aus 97 Gew.-% Dibutylphthalat und 3 Gew.-% Glycerintriacetat eingesetzt wurde. Die Düse war auf 240°C beheizt, und der Luftspalt betrug 20 mm.

Es wurde eine Hohlfasermembran erhalten mit einem Außendurchmesser von 413 μm und einer Wandstärke von 88 μm. In der REM-Untersuchung waren auch bei einer Vergrößerung von 60 000 an der äußeren Oberfläche keine Poren feststellbar. Im Bruchbild einer Bruchfläche senkrecht zur Längsachse der Hohlfasermembran war eine schwammartige, offenporige mikroporöse Stützstruktur erkennbar, die von der ca. 0,3 μm dicken Trennschicht abgedeckt wurde. Für die Membran gemäß diesem Beispiel wurde eine Volumenporosität von 57 % und ein $CO_2$-Fluss von 4,90 ml/(cm$^2$*min*bar) ermittelt. Die Membran wies eine Plasmadurchbruchzeit von mehr als 72 Stunden auf. Nach Erreichen dieser Zeit wurde die Prüfung abgebrochen.

Vergleichsbeispiel 1:

Die in Beispiel 3 verwendete Lösung von Poly-(4-methyl-1-penten) in Dioctylphthalat/Glycerinmonoacetat als Lösemittelsystem wurde durch eine Hohlfadendüse mit einem Außendurchmesser des Ringspalts von 1,2 mm und einem Ringspalt von 350 μm extrudiert und nach einem Luftspalt von 10 cm durch Dioctylphthalat als Abkühlmedium geführt. Das Abkühlmedium wurde auf Raumtemperatur gehalten. Dioctylphthalat selbst ist ein Löser für Poly-(4-methyl-1-penten).

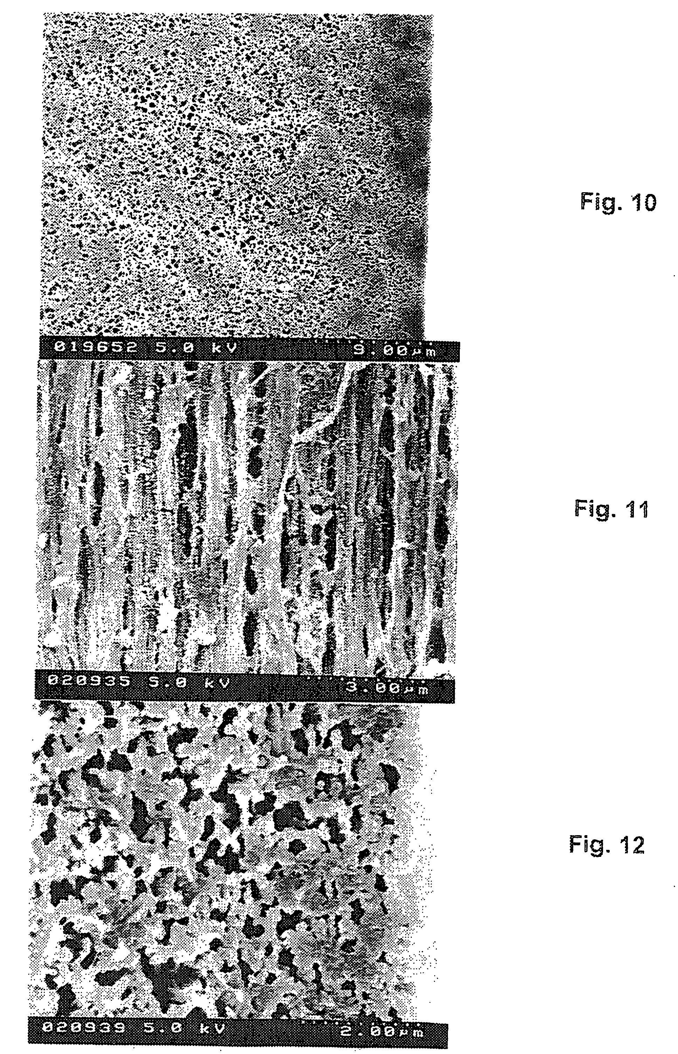

Die erhaltene Hohlfasermembran wies an ihrer äußeren Oberfläche eine Vielzahl von feinen Poren auf. Im Bruchbild einer Bruchfläche senkrecht zur Längsachse der Hohlfasermembran war eine Trennschicht nicht erkennbar; poröse Bereiche erstrekken sich bis zur Oberfläche (Fig. 10). Die äußere Oberfläche war spontan mit Isopropanol benetzbar.

Vergleichsbeispiel 2:

Eine Hohlfasermembran aus Polypropylen wurde wie in Beispiel 5 hergestellt. im Unterschied zu Beispiel 5 wurde jedoch als Abkühlmedium Sojaöl verwendet, welches auf 45°C temperiert war. Sojaöl ist in Bezug auf Polypropylen ein schwacher Löser.

Es wurde eine Hohlfasermembran mit einem Außendurchmesser von 414 μm und einer Wandstärke von 90 μm erhalten, deren äussere Oberfläche entsprechend den REM-Aufnahmen eine ausgeprägt offenporige Struktur aufwies (Fig. 11). Im Bruchbild einer Bruchfläche senkrecht zur Längsachse der Hohlfasermembran war an der äusseren Oberfläche keine Trennschicht erkennbar; die poröse Struktur reichte bis an die Oberfläche heran (Fig. 12). Die Membran gemäß diesem Beispiel wies einen ein $CO_2$-Fluss von 204 ml/(cm$^2$*min*bar) und eine Plasmadurchbruchzeit von nur 4 Stunden auf. Eine derartige Membran ist wohl für Standardanwendungen zur Blutoxygenation geeignet, nicht jedoch zur Langzeitoxygenation.

Vergleichsbeispiele 3 und 4:

25 Gew.-% Poly(4-methyl-1-penten) wurden bei 255°C in 75 Gew.-% einer Mischung aus 90 Gew.-% Isopropylmyristat und 10 Gew.-% Glycerinmonoacetat, d.h. entsprechend der Definition der vorliegenden Erfindung einer Mischung aus einem starken Löser und einem starken Nichtlöser, gelöst. Die auf 255°C temperierte homogene und klare Lösung wurde mittels eines Rakels auf eine auf Raumtemperatur gehaltene Glasplatte aufgerakelt, wobei zwischen Rakel und Glasplatte ein Abstand von 250 μm eingestellt war. Der abgekühlte poröse Polymerfilm wurde mit Isopropanol extrahiert und anschließend bei Raumtemperatur getrocknet.

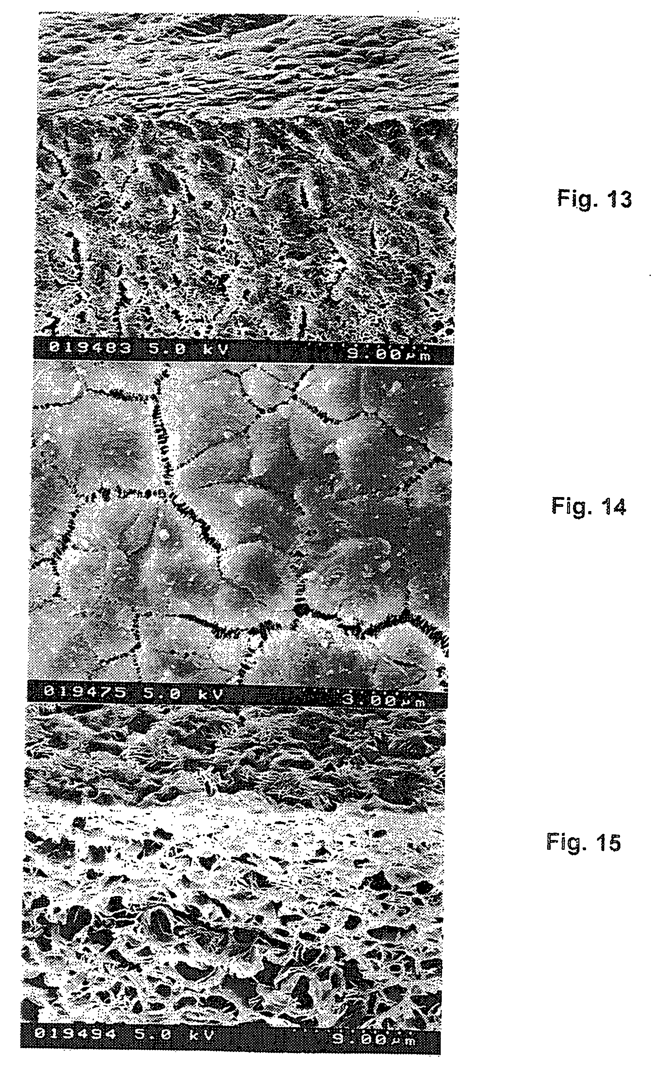

Die erhaltene Flachmembran wies über ihrer Dicke eine ausgeprägte kompakte und z.T. partikuläre Struktur mit dazwischen liegenden Porenkanälen auf (Fig. 13), die sich bis zu der Oberfläche, die während der Herstellung der Glasseite zugewandt war, erstreckten und dort Poren mit z.T. Größen oberhalb von 0,1 μm ausbildeten (Fig. 14). Eine Trennschicht war nicht erkennbar.

Bei Ausrakelung der Polymerlösung auf eine auf 100°C beheizte Glasplatte ergaben sich im Bereich der Membranwand offenporigere Strukturen. Es ist jedoch in der REM-Aufnahme der Bruchkante gemäß Figur 15 ebenfalls keine Trennschicht erkennbar, wobei die REM-Aufnahme die Bruchkante zwischen Membranwand und derjenigen Oberfläche wiedergibt, die während der Membranherstellung der Glasseite zugewandt war. Diese Oberfläche ist deutlich offenporig mit Poren im Mikrometerbereich.

**Patentansprüche**

1. Verfahren zur Herstellung einer integral asymmetrischen hydrophoben Membran mit einer schwammartigen, offenporigen mikroporösen Stützstruktur und einer Trennschicht mit gegenüber der Stützstruktur dichterer Struktur, wobei das Verfahren mindestens die Schritte umfaßt:

   a) Herstellung einer homogenen Lösung von 20-90 Gew.-% einer Polymerkomponente aus mindestens einem Polymer, ausgewählt aus der Gruppe der Polyolefine, in 80-10 Gew.-% eines Lösemittelsystems, enthaltend eine Verbindung A und eine Verbindung B, welche bei der Lösetemperatur flüssig und miteinander mischbar sind, wobei das eingesetzte Gemisch aus Polymerkomponente, Verbindung A und Verbindung B eine kritische Entmischungstemperatur und eine Erstarrungstemperatur aufweist und unterhalb der kritischen Entmischungstemperatur im flüssigen Aggregatzustand eine Mischungslücke, wobei als Verbindung A ein Löser für die Polymerkomponente ausgewählt wird und und die Verbindung B die Entmischungstemperatur einer Lösung, bestehend aus der Polymerkomponente und der Verbindung A, heraufsetzt,
   b) Ausformen der Lösung zu einem Formkörper mit einer ersten Oberfläche und einer zweiten Oberfläche in einem Formwerkzeug, welches eine Werkzeugtemperatur oberhalb der kritischen Entmischungstemperatur aufweist,
   c) Abkühlung des Formkörpers mittels eines Abkühlmediums, welches auf eine Abkühltemperatur unterhalb der Erstarrungstemperatur temperiert ist, mit einer solchen Geschwindigkeit, dass eine thermodynamische Nichtgleichgewichts-flüssig-flüssig-Phasentrennung in eine polymerreiche und eine polymerarme Phase und anschließend bei Unterschreiten der Erstarrungstemperatur Erstarrung der polymerreichen Phase erfolgt,
   d) gegebenenfalls Entfernen der Verbindungen A und B aus dem Formkörper,

   **dadurch gekennzeichnet, dass** als Verbindung A ein schwacher Löser für die Polymerkomponente ausgewählt wird, für den die Entmischungstemperatur einer Lösung von 25 Gew.-% der Polymerkomponente in diesem Löser um weniger als 10% unter dem Schmelzpunkt der reinen Polymerkomponente liegt, dass als Verbindung B ein Nichtlöser für die Polymerkomponente ausgewählt wird, welcher die Polymerkomponente beim Erwärmen bis zu seinem Siedepunkt nicht zu einer homogenen Lösung auflöst, und dass der Formkörper zur Abkühlung mit einem festen oder flüssigen Abkühlmedium in Kontakt gebracht wird, welches die Polymerkomponente bei Temperaturen bis zur Werkzeugtemperatur nicht löst und chemisch nicht mit ihm reagiert.

2. Verfahren nach Anspruch 1, **dadurch gekennzeichnet, dass** die Verbindung B ein schwacher Nichtlöser für die Polymerkomponente ist.

3. Verfahren nach einem oder mehreren der Ansprüche 1 oder 2, **dadurch gekennzeichnet, dass** das Abkühlmedium eine Flüssigkeit ist, die ein Nichtlöser für die Polymerkomponente ist.

4. Verfahren nach Anspruch 3, **dadurch gekennzeichnet, dass** das Abkühlmedium die Verbindung B enthält.

5. Verfahren nach Anspruch 3, **dadurch gekennzeichnet, dass** das Abkühlmedium eine Flüssigkeit ist, die ein starker Nichtlöser für die Polymerkomponente ist.

6. Verfahren nach eine oder mehreren der Ansprüche 1 bis 5, **dadurch gekennzeichnet, dass** ein Abkühlmedium eingesetzt wird, welches bei der Abkühltemperatur eine homogene, einphasige Flüssigkeit ist.

7. Verfahren nach einem oder mehreren der Ansprüche 1 bis 6, **dadurch gekennzeichnet, dass** das Abkühlmedium eine Temperatur aufweist, die mindestens 100°C unterhalb der kritischen Entmischungstemperatur liegt.

8. Verfahren nach einem oder mehreren der Ansprüche 1 bis 7, **dadurch gekennzeichnet, dass** der Formkörper nach Austritt aus dem Formwerkzeug und vor seiner Abkühlung zumindest mit einer seiner Oberflächen einer die Verdampfung der Verbindung A und/oder der Verbindung B fördernden Atmosphäre ausgesetzt wird.

9. Verfahren nach einem oder mehreren der Ansprüche 1 bis 8, **dadurch gekennzeichnet, dass** 30-60 Gew.-% der Polymerkomponente in 70-40 Gew.-% des Lösemittelsystems gelöst werden.

10. Verfahren nach einem oder mehreren der Ansprüche 1 bis 9, **dadurch gekennzeichnet, dass** das in der Polymerkomponente enthaltene mindestens eine Polymer mindestens ein ausschließlich aus Kohlenstoff und Wasserstoff bestehendes Polyolefin ist.

11. Verfahren nach Anspruch 10, **dadurch gekennzeichnet, dass** das mindestens eine Polyolefin ein Poly-(4-methyl-1-penten) ist.

12. Verfahren nach Anspruch 10, **dadurch gekennzeichnet, dass** das mindestens eine Polyolefin ein Polypropylen ist.

13. Verfahren nach Anspruch 10, **dadurch gekennzeichnet, dass** das mindestens eine Polyolefin eine Mischung aus einem Poly-(4-methyl-1-penten) und einem Polypropylen ist.

14. Verfahren nach Anspruch 10, **dadurch gekennzeichnet, dass** das mindestens eine Polyolefin ein Polyethylen ist.

15. Verfahren nach Anspruch 11, **dadurch gekennzeichnet, dass** als Verbindung A Palmkernöl, Dibutylphthalat, Dioctylphthalat, Butylstearat oder eine Mischung hieraus verwendet wird.

16. Verfahren nach Anspruch 11, **dadurch gekennzeichnet, dass** als Verbindung B Glycerintriacetat, Diethylphthalat, Rizinusöl, N,N-Bis(2-hydroxyethyl)talgfettamin, Sojaöl, Glycerindiacetat, Glycerinmonoacetat oder eine Mischung hieraus verwendet wird.

17. Verfahren nach Anspruch 12, **dadurch gekennzeichnet, dass** als Verbindung A N,N-Bis(2-hydroxyethyl)talgfettamin, Dioctylphthalat, Sojaöl, Palmkernöl oder eine Mischung hieraus verwendet wird.

18. Verfahren nach Anspruch 12, **dadurch gekennzeichnet, dass** als Verbindung B Dibutylphthalat, Diethylphthalat, Glycerintriacetat oder Rizinusöl oder eine Mischung hieraus verwendet wird.

19. Verfahren nach Anspruch 14, **dadurch gekennzeichnet, dass** als Verbindung A Sojaöl, Palmkernöl, Isopropylmyristat oder eine Mischung hieraus verwendet wird.

20. Verfahren nach Anspruch 14, **dadurch gekennzeichnet, dass** als Verbindung B Rizinusöl verwendet wird.

21. Verfahren nach einem oder mehreren der Ansprüche 1 bis 20, **dadurch gekennzeichnet, dass** der Anteil der Verbindung B im Lösemittelsystem 1 bis 45 Gew.-% beträgt.

22. Verfahren nach einem oder mehreren der Ansprüche 1 bis 21 zur Herstellung einer Hohlfasermembran.

23. Verwendung der nach einem Verfahren gemäß einem oder mehreren der Ansprüche 1 bis 22 hergestellten Membranen zur Oxygenation von Blut.

**Claims**

1. Process for producing an integrally asymmetrical hydrophobic membrane having a sponge-like, open-pored, microporous support structure and a separation layer with a denser structure compared to the support structure, the process comprising at least the steps of:

   a) preparing a homogeneous solution of 20-90% by weight of a polymer component consisting of at least one polymer, selected from the group of polyolefins, in 80-10% by weight of a solvent system containing a compound A and a compound B that are liquid and miscible with each other at the dissolving temperature, whereby the employed mixture of the polymer component and compounds A and B has a critical demixing temperature and a solidification temperature and has a miscibility gap in the liquid state of aggregation below the critical demixing temperature, whereby a solvent for the polymer component is selected for compound A and compound B raises the demixing temperature of a solution consisting of the polymer component and compound A, b) rendering the solution to form a shaped object, with first and second surfaces, in a die having a temperature above the critical demixing temperature,

c) cooling of the shaped object using a cooling medium, tempered to a cooling temperature below the solidification temperature, at such a rate that a thermodynamic non-equilibrium liquid-liquid phase separation into a high-polymer-content phase and a low-polymer content phase takes place and solidification of the high-polymer-content phase subsequently occurs when the temperature falls below the solidification temperature,

d) possibly removing compounds A and B from the shaped object,

**characterized in that** a weak solvent for the polymer component is selected for compound A, for which the demixing temperature of a solution of 25% by weight of the polymer component in this solvent is less than 10% below the melting point of the pure polymer component, that a non-solvent for the polymer component is selected for compound B that does not dissolve the polymer component to form a homogeneous solution when heated to the boiling point of the non-solvent, and that, for cooling, the shaped object is brought into contact with a solid or liquid cooling medium that does not dissolve or react chemically with the polymer component at temperatures up to the die temperature.

2. Process according to Claim 1, **characterized in that** compound B is a weak non-solvent for the polymer component.

3. Process according to one or more of Claims 1 or 2, **characterized in that** the cooling medium is a liquid that is a non-solvent for the polymer component.

4. Process according to Claim 3, **characterized in that** the cooling medium contains compound B.

5. Process according to Claim 3, **characterized in that** the cooling medium is a liquid that is a strong non-solvent for the polymer component.

6. Process according to one or more of Claims 1 to 5, **characterized in that** a cooling medium is used that is a homogeneous, single-phase liquid at the cooling temperature.

7. Process according to one or more of Claims 1 to 6, **characterized in that** the cooling medium has a temperature that is at least 100°C below the critical demixing temperature.

8. Process according to one or more of Claims 1 to 7, **characterized in that** at least one of the surfaces of the shaped object, after leaving the die and prior to its cooling, is subjected to an atmosphere promoting the evaporation of compound A andlor compound B.

9. Process according to one or more of Claims 1 to 8, **characterized in that** 30-60% by weight of the polymer component is dissolved in 70-40% by weight of the solvent system.

10. Process according to one or more of Claims 1 to 9, **characterized in that** the at least one polymer contained in the polymer component is at least one polyolefin consisting exclusively of carbon and hydrogen.

11. Process according to Claim 10, **characterized in that** the at least one polyolefin is a poly(4-methyl-1-pentene).

12. Process according to Claim 10, **characterized in that** the at least one polyolefin is a polypropylene.

13. Process according to Claim 10, **characterized in that** the at least one polyolefin is a mixture of a poly(4-methyl-1-pentene) and a polypropylene.

14. Process according to Claim 10, **characterized in that** the at least one polyolefin is a polyethylene.

15. Process according to Claim 11, **characterized in that** palm nut oil, dibutyl phthalate, dioctyl phthalate, butyl stearate, or a mixture thereof is used as compound A.

16. Process according to Claim 11, **characterized in that** glycerin triacetate, diethyl phthalate, castor oil, N,N-bis (2-hydroxyethyl)tallow amine, soybean oil, glycerin diacetate, glycerin monoacetate or a mixture thereof is used as compound B.

**17.** Process according to Claim 12, **characterized in that** N,N-bis(2-hydroxyethyl)tallow amine, dioctyl phthalate, soybean oil, palm nut oil, or a mixture thereof is used as compound A.

**18.** Process according to Claim 12, **characterized in that** dibutyl phthalate, diethyl phthalate, glycerin triacetate, castor oil, or a mixture thereof is used as compound B.

**19.** Process according to Claim 14, **characterized in that** soybean oil, palm nut oil, isopropyl myristate, or a mixture thereof is used as compound A.

**20.** Process according to Claim 14, **characterized in that** castor oil is used as compound B.

**21.** Process according to one or more of Claims 1 to 20, **characterized in that** the fraction of compound B in the solvent system is 1 to 45% by weight.

**22.** Process according to one or more of Claims 1 to 21 for producing a hollow-fiber membrane.

**23.** Use of the membranes produced by a process according to one or more of Claims 1 to 22 for oxygenation of blood.

**Revendications**

**1.** Procédé de fabrication d'une membrane hydrophobe asymétrique à peau intégrée, comportant une structure de support microporeuse à pores ouverts, de type éponge, et une couche séparatrice de structure plus dense que la structure de support, lequel procédé comporte au moins les étapes suivantes :

a) le fait de préparer une solution homogène de 20 à 90 % en poids d'un composant polymère, constitué d'au moins un polymère choisi dans l'ensemble des polyoléfines, dans 80 à 10 % en poids d'un système solvant contenant un composé A et un composé B qui, à la température de dissolution, sont liquides et miscibles l'un à l'autre, le mélange constitué par le composant polymère, le composé A et le composé B présentant une température critique de démixtion et une température de solidification, ainsi qu'une lacune de miscibilité à l'état liquide au-dessous de la température critique de démixtion, un solvant du composant polymère étant choisi pour composé A, et le composé B faisant monter la température de démixtion d'une solution constituée du composant polymère et du composé A ;
b) le fait de mettre en forme la solution pour en faire un corps formé doté d'une première surface et d'une deuxième surface, dans un outil de formage qui se trouve à une température supérieure à la température critique de démixtion ;
c) le fait de faire refroidir le corps formé, à l'aide d'un milieu réfrigérant maintenu à une température de refroidissement inférieure à la température de solidification, à une vitesse telle qu'il se produit une séparation de phases liquide/liquide, hors équilibre thermodynamique, en une phase riche en polymère et une phase pauvre en polymère, et qu'ensuite la phase riche en polymère se solidifie en restant à une température inférieure à la température de solidification ;
d) et le cas échéant, le fait d'éliminer du corps formé le composé A et le composé B ;

et lequel procédé est **caractérisé en ce que** l'on choisit pour composé A un solvant médiocre du composant polymère pour lequel la température de démixtion d'une solution à 25 % en poids du composant polymère dans ce solvant est inférieure de moins de 10 °C au point de fusion du composant polymère pur, **en ce que** l'on choisit pour composé B un non-solvant du composant polymère qui, chauffé jusqu'à son point d'ébullition, ne dissout pas le composant polymère en une solution homogène, et **en ce que**, pour faire refroidir le corps formé, on le met en contact avec un milieu réfrigérant solide ou liquide qui, aux températures allant jusqu'à la température de l'outil de formage, ne dissout pas le composant polymère et ne réagit pas chimiquement avec lui.

**2.** Procédé conforme à la revendication 1, **caractérisé en ce que** le composé B est un médiocre non-solvant du composant polymère.

**3.** Procédé conforme à l'une ou plusieurs des revendications 1 et 2, **caractérisé en ce que** le milieu réfrigérant est un liquide qui est un non-solvant du composant polymère.

**4.** Procédé conforme à la revendication 3, **caractérisé en ce que** le milieu réfrigérant contient du composé B.

**5.** Procédé conforme à la revendication 3, **caractérisé en ce que** le milieu réfrigérant est un liquide qui est un bon non-solvant du composant polymère.

**6.** Procédé conforme à l'une ou plusieurs des revendications 1 à 5, **caractérisé en ce que** l'on utilise un milieu réfrigérant qui, à la température de refroidissement, est un liquide homogène monophasique.

**7.** Procédé conforme à l'une ou plusieurs des revendications 1 à 6, **caractérisé en ce que** le milieu réfrigérant se trouve à une température inférieure d'au moins 100 °C à la température critique de démixtion.

**8.** Procédé conforme à l'une ou plusieurs des revendications 1 à 7, **caractérisé en ce que** l'on expose le corps formé, après l'avoir retiré de l'outil de formage et avant de le faire refroidir, par au moins l'une de ses surfaces, à un environnement favorisant l'évaporation du composé A et/ou du composé B.

**9.** Procédé conforme à l'une ou plusieurs des revendications 1 à 8, **caractérisé en ce qu'**il y a 30 à 60 % en poids de composant polymère dissous dans 70 à 40 % en poids de système solvant.

**10.** Procédé conforme à l'une ou plusieurs des revendications 1 à 9, **caractérisé en ce que** ledit polymère contenu, au nombre d'au moins un, dans le composant polymère est au moins une polyoléfine exclusivement constituée de carbone et d'hydrogène.

**11.** Procédé conforme à la revendication 10, **caractérisé en ce que** ladite polyoléfine au nombre d'au moins une est un poly(4-méthyl-1-pentène).

**12.** Procédé conforme à la revendication 10, **caractérisé en ce que** ladite polyoléfine au nombre d'au moins une est un polypropylène.

**13.** Procédé conforme à la revendication 10, **caractérisé en ce que** ladite polyoléfine au nombre d'au moins une est un mélange constitué d'un poly(4-méthyl-1-pentène) et d'un polypropylène.

**14.** Procédé conforme à la revendication 10, **caractérisé en ce que** ladite polyoléfine au nombre d'au moins une est un polyéthylène.

**15.** Procédé conforme à la revendication 11, **caractérisé en ce que** l'on emploie comme composé A de l'huile de palmiste, du phtalate de dibutyle, du phtalate de dioctyle ou du stéarate de butyle, ou un mélange de ces composés.

**16.** Procédé conforme à la revendication 11, **caractérisé en ce que** l'on emploie comme composé B du triacétate de glycérol, du phtalate de diéthyle, de l'huile de ricin, de la N,N-bis(2-hydroxyéthyl)suifamine, de l'huile de soja, du diacétate de glycérol ou du monoacétate de glycérol, ou un mélange de ces composés.

**17.** Procédé conforme à la revendication 12, **caractérisé en ce que** l'on emploie comme composé A de la N,N-bis (2-hydroxyéthyl)suifamine, du phtalate de dioctyle, de l'huile de soja ou de l'huile de palmiste, ou un mélange de ces composés.

**18.** Procédé conforme à la revendication 12, **caractérisé en ce que** l'on emploie comme composé B du phtalate de dibutyle, du phtalate de diéthyle, du triacétate de glycérol ou de l'huile de ricin, ou un mélange de ces composés.

**19.** Procédé conforme à la revendication 14, **caractérisé en ce que** l'on emploie comme composé A de l'huile de soja, de l'huile de palmiste ou du myristate d'isopropyle, ou un mélange de ces composés.

**20.** Procédé conforme à la revendication 14, **caractérisé en ce que** l'on emploie comme composé B de l'huile de ricin.

**21.** Procédé conforme à l'une ou plusieurs des revendications 1 à 20, **caractérisé en ce que** la proportion pondérale de composé B dans le système solvant vaut de 1 à 45 %.

**22.** Procédé, conforme à l'une ou plusieurs des revendications 1 à 21, de fabrication de membranes en fibres creuses.

**23.** Utilisation, pour oxygéner du sang, de membranes fabriquées selon un procédé conforme à l'une ou plusieurs des revendications 1 à 22.

Fig. 1

Fig. 2

Fig. 3

Fig. 4

Fig. 5

Fig. 6

Fig. 7

Fig. 8

Fig. 9

Fig. 10

Fig. 11

Fig. 12

Fig. 13

Fig. 14

Fig. 15